# EUROPÄISCHE PATENTSCHRIFT

(11) **EP 4 211 707 B1**
(45) Veröffentlichungstag und Bekanntmachung des Hinweises auf die Patenterteilung: **18.02.2026**
(21) Anmeldenummer: 21799188.4
(22) Anmeldetag: 13.09.2021
(51) Int. Cl.: H01F 7/08, H01F 7/122, H02K 37/10, H01F 7/16, H01F 7/06, H02K 41/035

(54) **STELLVORRICHTUNG, STELLSYSTEM SOWIE COMPUTERPROGRAMMPRODUKT**
ADJUSTMENT DEVICE, ADJUSTMENT SYSTEM AND COMPUTER PROGRAM PRODUCT
DISPOSITIF DE RÉGLAGE, SYSTÈME DE RÉGLAGE ET PRODUIT-PROGRAMME D'ORDINATEUR

(30) Priorität: 11.09.2020 DE 102020123803
(43) Veröffentlichungstag der Anmeldung: 19.07.2023
(73) Patentinhaber: Physik Instrumente (PI) SE & Co. KG, 76228 Karlsruhe (DE)
(72) Erfinder: GEISSLER, Daniel, 76532 Baden-Baden (DE)
(74) Vertreter: Keller Schneider Patentanwaltsgesellschaft mbH
(86) Internationale Anmeldenummer: PCT/EP2021/075120
(87) Internationale Veröffentlichungsnummer: WO 2022/053688

(56) Entgegenhaltungen:
- DE-A1- 10 322 533
- DE-A1- 102013 110 029
- US-A- 5 659 215
- US-A1- 2003 197 910
- US-B1- 9 746 665

## Beschreibung

Die Erfindung betrifft eine Stellvorrichtung, ein Stellsystem sowie ein Computerprogrammprodukt.

Aus der DE 1013 22 533 A1 ist eine Traversiervorrichtung bekannt, die die Bewegung eines Rotors eines Traversiermotors auf eine Traversierführung überträgt.

Die US 9,746,665 B1 beschreibt einen Aktuator zur Einstellung eines Spiegels. Der Aktuator weist zwei Statoren und einen zwischen diesen positionierten Rotor auf.

Die US 2003/197910 A beschreibt einen schnell einstellbaren Spiegel, bestehend aus: einem Basiselement; einem äußeren Kardanring, der über ein Paar flexibler bzw. biegbarer Drehgelenke schwenkbar mit dem Basiselement verbunden ist; einem inneren Kardanring, der über ein Paar flexibler bzw. biegbarer Drehgelenke schwenkbar mit dem äußeren Kardanring verbunden ist; einem Spiegel, der fest mit dem inneren Kardanring verbunden ist; ein erstes Paar Schwingspulenantriebe, das ein erstes Paar magnetisierter Statoren, die fest mit dem Basiselement verbunden sind, und ein erstes Paar Schwingspulen umfasst, die fest mit dem äußeren Kardanring verbunden sind; und ein zweites Paar Schwingspulenantriebe, das ein zweites Paar magnetisierter Statoren, die fest mit dem Basiselement verbunden sind, und ein zweites Paar Schwingspulen umfasst, die fest mit dem inneren Kardanring verbunden sind.

Die US 5 659 215 A beschreibt einen Voice-Coil-Motor für ein Festplattenlaufwerk.

Die DE 10 2013 110029 A1 beschreibt einen elektrodynamischen Aktor mit einer Magnetanordnung zur Erzeugung eines Magnetfelds und ein relativ zur Magnetanordnung bewegbares Stellglied.

Aus der US 5,169,050 ist eine Stellvorrichtung bekannt, mit der Bewegungen eines Drahtbond-Kopfes durch einen Aktuator erzeugt werden. Der Drahtbond-Kopf ist an einem ersten Ende eines Halters befestigt und der Aktuator sind an einem zweiten Ende, das entgegen gesetzt zu dem ersten Ende gelegen ist, befestigt. Der Halter ist zwischen dem ersten und dem zweiten Ende mittels eines Strukturgelenks an einem Träger gelagert. Der Aktuator weist eine metallische Hülse auf, in der zwei zueinander entgegen gesetzt gewickelte Spulen angeordnet sind. Die Achsen der Spulen verlaufen konzentrisch zueinander und konzentrisch zu der Achse der Hülse. Die Spulen und die Hülse sind an dem Träger befestigt. In den Spulen ist ein Ferromagnet angeordnet, der an dem zweiten Ende des Halters befestigt ist. Ein Stromfluss in den Spulen bewirkt eine Verschiebung des Ferromagnets in den Spulen und somit eine Drehung des Halters gegenüber dem Träger. Durch eine entsprechende Magnetisierung des Ferromagneten und die relative Position des Ferromagnets in den Spulen werden Rückstellkräfte des Strukturgelenks kompensiert.

Eine Aufgabe der Erfindung ist, eine Stellvorrichtung bereitzustellen, die präzise Stellbewegungen mit einem geringen Energieverbrauch ermöglicht sowie auch hinsichtlich Fertigung und Montage vorteilhaft ist.

Eine weitere Aufgabe der Erfindung ist, ein Stellsystem und ein Computerprogrammprodukt bereitzustellen, mit dem ein Betriebszustand der Stellvorrichtung ermittelt werden kann.

Diese Aufgaben werden mit den Merkmalen der unabhängigen Ansprüche gelöst. Weitere Ausführungsformen sind in den auf diesen rückbezogenen Unteransprüchen angegeben.

Nach der Erfindung ist eine Stellvorrichtung vorgesehen, die aufweist: ein Basis-Bauteil, einen Stellkörper, zumindest ein Festkörpergelenk, mit dem der Stellkörper an dem Basis-Bauteil um eine Festkörpergelenk-Drehachse drehbar gelagert ist, und zumindest eine Antriebsvorrichtung, die an dem Basis-Bauteil und unter Ausbildung eines Hebels zur Festkörpergelenk-Drehachse an eine Stellkörper-Anschlussvorrichtung gekoppelt ist, um den Stellkörper relativ zu dem Basis-Bauteil zu bewegen, z.B. um eine Stellbewegung des Stellkörpers entlang eines Stellwegs zu erzeugen. Bei jeder Ausführungsform der Erfindung weist die Antriebsvorrichtung auf:
einen Aktor mit einer elektrischen Spule und mit zumindest einem Kompensations-Bauteil aus einem magnetisierbaren oder magnetisierten Material, wobei das Kompensations-Bauteil und die Spule relativ zueinander mechanisch fixiert oder fixierbar sind, sowie
zumindest ein Permanentmagnet-Segment, das jeweils in einem berührungslosen Abstand in einer in Spulenachse verlaufenden Richtung neben der Spule gelegen ist.

Bei allen erfindungsgemäßen Ausführungsformen kann vorgesehen sein, dass der elektrischen Spule eine Spulenachse zugeordnet ist, die entlang der Festkörpergelenk-Drehachse verläuft. Die Spulenachse der Spule kann hierin insbesondere als geradlinige Schwerpunktlinie der geometrischen Form der Spule definiert sein. Alternativ zu dieser Definition der Spulenachse kann die Spulenachse auch derart definiert sein, dass diese in Position und Richtung identisch mit der zentralen krümmungslosen Feldlinie der bestromten Spule ist, die also in dem Fall auftritt, in dem an der Spule eine Spannung anliegt und in dieser ein elektrischer Strom fließt.

Bei allen erfindungsgemäßen Ausführungsformen kann vorgesehen sein, dass jedes des zumindest einen Permanentmagnet-Segments einer jeweiligen Antriebsvorrichtung von der Stellkörper-Drehachse D1 aus gesehen in einer Richtung in oder entlang der Spulenachse AS polarisiert ist.

Bei allen erfindungsgemäßen Ausführungsformen kann die Lagerung der Antriebsvorrichtung an der Stellvorrichtung zur Ausführung der Stellbewegung nach einer der beiden Alternativen (a), (b) vorgesehen sein:
(a) der Aktor ist an das Basis-Bauteil gekoppelt und das Permanentmagnet-Segment ist an die Stellkörper-Anschlussvorrichtung gekoppelt,
(b) der Aktor ist an die Stellkörper-Anschlussvorrichtung gekoppelt und das Permanentmagnet-Segment ist an das Basis-Bauteil gekoppelt.

Dadurch ist oder sind bei allen erfindungsgemäßen Ausführungsformen das zumindest eine Permanentmagnet-Segment und der Aktor relativ zueinander bewegbar angeordnet, so dass sich durch diese Relativbewegung eine Relativbewegungs-Richtung ergibt. Die "Relativbewegungs-Richtung" bedeutet hierin insbesondere die oder eine Richtung der Relativbewegung zwischen Spule und Permanentmagnet-Segment bei Aktuierung einer jeweiligen Antriebsvorrichtung. Bei allen erfindungsgemäßen Ausführungsformen kann vorgesehen sein, dass diese Relativbewegungs-Richtung quer zu einer Ebene verläuft, die von der Festkörpergelenk-Drehachse des Stellkörpers und der Stellkörper-Anschlussvorrichtung, an die der jeweilige Aktor gekoppelt ist, aufgespannt ist.

Dabei kann generell die Spulenachse der Spule alternativ in unterschiedlichen Richtungen verlaufen, insbesondere entlang oder quer zur Festkörpergelenk-Drehachse.

Das Permanentmagnet-Segment kann hierin generell insbesondere ein Ferromagnet-Segment sein.

Bei jeder der erfindungsgemäßen Ausführungsformen der Stellvorrichtung kann insbesondere die Antriebsvorrichtung derart ausgeführt sein, dass in einem Relativbewegungs-Bereich einer eine Stellbewegung der Antriebsvorrichtung hervorrufende Bewegung des zumindest einen Permanentmagnet-Segments und des Aktors relativ zueinander, in der Spulenachse gesehen, sich zumindest ein Permanentmagnet-Segment des zumindest einen Permanentmagnet-Segments und ein Abschnitt der Spule zumindest abschnittsweise überlappen.

Alternativ dazu kann jede der Ausführungsformen der erfindungsgemäßen Stellvorrichtung mit der Antriebsvorrichtung derart ausgeführt sein, dass in einem und insbesondere dem gesamten Relativbewegungs-Bereich der Relativ-Bewegung zwischen dem zumindest einen Permanentmagnet-Segment und dem Aktor, die eine Stellbewegung der Antriebsvorrichtung hervorruft, in der Spulenachse gesehen, sich zumindest ein Permanentmagnet-Segment des zumindest einen Permanentmagnet-Segments und ein Abschnitt der Spule nicht überlappen, sondern deren Außenumfänge sich bis zu einem Minimalabstand annähern. Der MinimalAbstand kann sich insbesondere zwischen einem Betrag, der sich aus dem Durchmesser der Spule multipliziert mit einem Faktor, der insbesondere in einem Wertebereich von 0,001 und 0,25 liegen kann, ergeben.

Alternativ oder zusätzlich zu den Ausführungsformen der erfindungsgemäßen Stellvorrichtung, für die in Bezug auf die Grenzen der Relativ-Bewegung zwischen dem zumindest einen Permanentmagnet-Segment und dem Aktor eine Überlappung oder ein Minimalabstand definiert ist, kann definiert sein, dass in diesem Relativbewegungs-Bereich das Kompensations-Bauteil zwischen zwei Positionen relativ zum Permanentmagnet-Segment bewegbar ist, zwischen denen sich die magnetische Wechselwirkung zwischen Permanentmagnet-Segment und Kompensations-Bauteil verändert.

Bei jeder der erfindungsgemäßen Ausführungsformen der Stellvorrichtung kann insbesondere die Antriebsvorrichtung derart ausgeführt sein, dass in einem ersten Relativbewegungs-Zustand, in der Spulenachse gesehen das zumindest eine Kompensations-Bauteil außerhalb eines des zumindest einen Permanentmagnet-Segments gelegen ist und in einem zweiten Relativbewegungs-Zustand dasselbe Kompensations-Bauteil und dasselbe Permanentmagnet-Segment sich überlappen oder zumindest teilweise oder ganz überdecken. Dabei kann insbesondere vorgesehen sein kann, dass sich in diesem zweiten Relativbewegungs-Zustand dasselbe Kompensations-Bauteil und dasselbe Permanentmagnet-Segment vollständig überlappen oder vollständig überdecken. Der erste Relativbewegungs-Zustand kann insbesondere ein vorbestimmter Referenz-Zustand sein.

Bei Ausführungsformen der Stellvorrichtung mit einer Anordnung von einem Paar von Permanentmagnet-Segmenten, also von einem ersten Permanentmagnet-Segment und einem zweiten Permanentmagnet-Segment, auf einer ersten Seite der Spule, optional zusätzlich einem weiteren Paar von Permanentmagnet-Segmenten, das auf einer zweiten Seite der Spule, die in Bezug auf die Spule entgegen gesetzt zu der ersten Seite gelegen ist und einem weiteren ersten Permanentmagnet-Segment, das in der Spulenachse gesehen auf derselben Höhe wie das erste Permanentmagnet-Segment gelegen ist, und ein weiteres zweites Permanentmagnet-Segment, das in der Spulenachse gesehen auf derselben Höhe wie das zweite Permanentmagnet-Segment gelegen ist, kann vorgesehen sein, dass folgende Relativbewegungs-Zustände einstellbar sind:
ein erster Relativbewegungs-Zustand, der insbesondere der Referenz-Zustand sein kann, bei dem insbesondere, in der Spulenachse gesehen, jedes des zumindest einen Kompensations-Bauteils außerhalb jedes der Permanentmagnet-Segmente gelegen sein kann oder, alternativ dazu, jedes des zumindest einen Kompensations-Bauteils das zumindest eine Permanentmagnet-Segment des einen Paares von Permanentmagnet-Segmenten oder der zwei Paare von Permanentmagnet-Segmenten zumindest teilweise überdeckt,
ein zweiter Relativbewegungs-Zustand, bei dem sich das erste Permanentmagnet-Segment und gegebenenfalls das weitere erste Permanentmagnet-Segment, das jeweils in der Spulenachse gesehen auf derselben Höhe wie das erste Permanentmagnet-Segment angeordnet ist, bis zu dem vorgenannten Minimalabstand angenähert hat, oder bei dem eine zumindest teilweise Überdeckung zwischen einem des zumindest einen Kompensations-Bauteils und dem ersten Permanentmagnet-Segment und gegebenenfalls dem weiteren ersten Permanentmagnet-Segment erfolgt,
ein dritter Relativbewegungs-Zustand, bei dem sich das zweite Permanentmagnet-Segment und gegebenenfalls das weitere zweite Permanentmagnet-Segment, das jeweils in der Spulenachse gesehen auf derselben Höhe wie das zweite Permanentmagnet-Segment angeordnet ist, bis zu dem vorgenannten Minimalabstand angenähert hat, oder bei dem eine zumindest teilweise Überdeckung zwischen einem des zumindest einen Kompensations-Bauteils und dem zweiten Permanentmagnet-Segment und gegebenenfalls dem weiteren zweiten Permanentmagnet-Segment erfolgt.

Dabei können insbesondere der zweite Relativbewegungs-Zustand und der dritte Relativbewegungs-Zustand in Bezug auf die Spulenachse entgegen gesetzt zueinander gelegene Extrempositionen der Relativbewegung zwischen Spule und dem jeweiligen Permanentmagnet-Segment sein.

Bei Ausführungsformen der Stellvorrichtung mit einer Anordnung von zumindest einem Paar von Permanentmagnet-Segmenten kann vorgesehen sein, dass in dem zweiten Relativbewegungs-Zustand und in dem dritten Relativbewegungs-Zustand eine die Rückstellkraft kompensierende Haltekraft erzeugt wird, die insbesondere mindestens 0,1 % , bevorzugt mindestens 50 % , und besonders bevorzugt mindestens 80 % der Rückstellkraft beträgt, die in der jeweils momentanen Position der Relativbewegung zwischen Spule und dem jeweiligen Permanentmagnet-Segment von dem Festkörpergelenk entsteht. Bei einer in dieser Hinsicht besonders optimierten erfindungsgemäßen Stellvorrichtung kann die die Rückstellkraft kompensierende Haltekraft auch mindestens 90 % oder sogar auch 95 % der Rückstellkraft betragen.

Bei erfindungsgemäßen Ausführungsformen der Stellvorrichtung, bei denen zumindest eine Antriebsvorrichtung nur ein erstes und gegebenenfalls ein weiteres erstes Permanentmagnet-Segment aufweist, kann vorgesehen sein, dass der erste Relativbewegungs-Zustand, der insbesondere der Referenz-Zustand sein kann, und der zweite Relativbewegungs-Zustand die in Bezug auf die Spulenachse entgegen gesetzt zueinander gelegenen Extrempositionen der Relativbewegung zwischen Spule und dem jeweiligen Permanentmagnet-Segment sind. Dabei kann insbesondere vorgesehen sein, dass die Spulenachse entlang der Festkörpergelenk-Drehachse verläuft. Alternativ dazu kann vorgesehen sein, dass die Relativbewegungs-Richtung der Relativbewegung zwischen Spule und Permanentmagnet-Segment quer zu einer Ebene verläuft, die von der Festkörpergelenk-Drehachse des Stellkörpers und der Stellkörper-Anschlussvorrichtung, an der der jeweilige Aktor gekoppelt ist, aufgespannt ist. In diesem Fall kann auch vorgesehen sein, dass die Spulenachse quer zu der Festkörpergelenk-Drehachse verläuft.

Bei erfindungsgemäßen Ausführungsformen der Stellvorrichtung, bei denen zumindest eine Antriebsvorrichtung nur ein zweites und gegebenenfalls ein weiteres zweites Permanentmagnet-Segment aufweist, kann vorgesehen sein, dass der erste Relativbewegungs-Zustand, der insbesondere der Referenz-Zustand sein kann, und der dritte Relativbewegungs-Zustand die in Bezug auf die Spulenachse entgegen gesetzt zueinander gelegenen Extrempositionen der Relativbewegung zwischen Spule und dem jeweiligen Ferromagnet-Segment sind.

Bei jeder der erfindungsgemäßen Ausführungsformen der Stellvorrichtung kann vorgesehen sein, dass in zumindest einer Antriebsvorrichtung das Kompensations-Bauteil mittels eines Einstellmechanismus der Antriebsvorrichtung in einer Relativposition innerhalb eines Einstellbereichs relativ zur Spule oder zum Spulengehäuse einstellbar ist. Mit dem Einstellmechanismus ist das Kompensations-Bauteil relativ zur Spule oder zum Spulengehäuse in dieser eingestellten Relativposition innerhalb des Einstellbereichs mittels einer Fixiervorrichtung des Einstellmechanismus fixierbar. Durch Anpassung einer Relativposition kann insbesondere der Stellbereich des Aktors, in dem die Rückstellkraft des zumindest ein Festkörpergelenks ganz oder teilweise kompensiert wird, innerhalb des gesamten Stellbereichs auf den Einzelfall angepasst und optimiert werden. Dabei kann insbesondere vorgesehen sein, dass sich der Einstellbereich über maximal 50 % des mittleren Durchmessers der Spule quer zur Spulenachse AS erstreckt.

Jede der zumindest einen Stellkörper-Anschlussvorrichtung ist in einem Abstand zu der Stellkörper-Drehachse gelegen, wobei vorgesehen sein kann, dass der Abstand mindestens ein Zehntel des kleinsten Durchmessers der Spule beträgt.

Nach einer Ausführungsform der Erfindung ist eine Stellvorrichtung vorgesehen, die aufweist: ein Basis-Bauteil, einen Stellkörper, zumindest ein Festkörpergelenk, mit dem der Stellkörper an dem Basis-Bauteil um eine Festkörpergelenk-Drehachse drehbar gelagert ist, eine Antriebsvorrichtung, die einen Aktor aufweist und die an das Basis-Bauteil und unter Ausbildung eines Hebels zur Festkörpergelenk-Drehachse an eine Stellkörper-Anschlussvorrichtung gekoppelt ist und die nach einer der hierin definierten Varianten realisiert ist. Nach einer weiteren Ausführungsform der erfindungsgemäßen Stellvorrichtung weist diese zwei oder mehr als zwei Antriebsvorrichtungen auf, die an dem Basis-Bauteil und an jeweils eine Stellkörper-Anschlussvorrichtung gekoppelt sind, wobei jede Antriebsvorrichtung an das Basis-Bauteil und an eine Stellkörper-Anschlussvorrichtung gekoppelt ist. Dabei kann vorgesehen sein, dass zwei Antriebsvorrichtungen jeweils mit einer Stellkörper-Anschlussvorrichtung an den Stellkörper gekoppelt sind, wobei die Stellkörper-Anschlussvorrichtungen in Bezug auf die Festkörpergelenk-Drehachse einander gegenüber liegend angeordnet sind. Dabei können die zwei Antriebsvorrichtungen in Bezug auf die Festkörpergelenk-Drehachse einander gegenüber liegend angeordnet ein. Bei jeder der genannten Ausführungsformen der Stellvorrichtung können auch mehrere Stellkörper-Anschlussvorrichtungen in Bezug auf die Festkörpergelenk-Drehachse auf derselben Seite des Stellkörpers angeordnet sein.

Die Ankopplung einer Antriebsvorrichtung an das Basis-Bauteil erfolgt vorzugsweise an einem Bereich des Basis-Bauteils, der vom Zentrum des Stellkörpers aus gesehen im Bereich der jeweiligen Stellkörper-Anschlussvorrichtung oder in einem Winkelbereich von maximal 85 Grad und vorzugsweise von maximal 45 Grad in beiden Umfangsrichtungen gelegen ist. Generell kann die Ankopplung einer Antriebsvorrichtung an das Basis-Bauteil an jeglichen Bereich des Basis-Bauteils angeordnet sein.

Die Stellvorrichtung weist zumindest ein Kompensations-Bauteil aus einem magnetisierbaren oder magnetisierten Material auf. Das Kompensations-Bauteil ist vorzugsweise in der Spulenachse gesehen außerhalb eines Abschnitts der Spule angeordnet. Speziell kann bei jeder der Ausführungsformen der Stellvorrichtung die Anordnung des zumindest einen Kompensations-Bauteils jeweils nach einer oder beiden der folgenden Alternativen (K1), (K2) vorgesehen sein:
(K1) in der Spulenachse gesehen in dem von dem inneren Umfang der Spule umlaufenen Außenraum oder, bei einem zumindest abschnittsweise hohlring-förmigen Spulengehäuse, in dem von dem hohlring-förmigen Spulengehäuse umlaufenen Außenraum;
(K2) in der Spulenachse gesehen in dem außerhalb des äußeren Umfangs der Spule gelegenen Außenraum oder, bei einem zumindest abschnittsweise hohlring-förmigen Spulengehäuse, in dem außerhalb des äußeren Umfangs des hohlring-förmigen Spulengehäuses gelegenen Außenraum.

Insbesondere kann bei jeder Ausführungsform der erfindungsgemäßen Stellvorrichtung oder des Aktors zumindest ein Kompensations-Bauteil derart gestaltet und angeordnet sein, dass zumindest in einem Abschnitt des Bewegungsbereichs des zumindest einen Permanentmagnet-Segments relativ zum Aktor, in der Spulenachse gesehen, ein Permanentmagnet-Segment des zumindest einen Permanentmagnet-Segments einen Abschnitt der Spule überlappt oder zumindest abschnittsweise überdeckt oder sich diese bis zu dem vorgenannten Minimalabstand annähern. In diesen Fällen, aber unabhängig davon, kann vorgesehen sein, dass die jeweilige Antriebsvorrichtung eine die Rückstellkraft kompensierende Haltekraft erzeugt, die insbesondere mindestens 0,1 % und dabei speziell mindestens 1 % , bevorzugt mindestens 50 % , und besonders bevorzugt mindestens 80 % der Rückstellkraft beträgt, die in der jeweils momentanen Position der Relativbewegung zwischen Spule und dem jeweiligen Permanentmagnet-Segment von dem Festkörpergelenk entsteht. Bei einer in dieser Hinsicht besonders optimierten erfindungsgemäßen Stellvorrichtung kann die die Rückstellkraft kompensierende Haltekraft auch mindestens 90 % oder sogar auch 95 % der Rückstellkraft betragen.

Die Überlappung oder zumindest abschnittsweise Überdeckung kann insbesondere auch im Referenz-Zustand realisiert sein.

Unter "Referenz-Zustand" kann hierin insbesondere die Nulllage oder ein Stellzustand oder Ausgangszustand des Aktors bezeichnet werden. Alternativ oder zusätzlich kann unter dem "Referenz-Zustand" kann insbesondere der Stellzustand des Aktors, bei dem kein Strom in der Spule fließt, verstanden werden.

Bei der erfindungsgemäßen Stellvorrichtung wird in dem vorgenannten Abschnitt des Bewegungsbereichs oder insbesondere in dem vorgenannten Überlappungsbereich oder bei Annäherung insbesondere bis zu dem Minimalabstand der Relativbewegung zwischen Spule und dem jeweiligen des zumindest einen Permanentmagnet-Segments aufgrund der magnetischen Wechselwirkung eine Haltekraft zwischen dem jeweils betreffenden des zumindest einen Permanentmagnet-Segments und dem zumindest einen Kompensations-Bauteil erzeugt, mit der eine Kompensation der durch die Auslenkung des Festkörpergelenks hervorgerufenen Rückstellkraft bzw. des entsprechenden Rückstellmoments erfolgt. Die die Rückstellkraft kompensierende Haltekraft kann dabei insbesondere mindestens 0,1 % und dabei speziell mindestens 1 % , bevorzugt mindestens 50 % , und besonders bevorzugt mindestens 80 % der Rückstellkraft betragen. Die kompensierende Haltekraft resultiert dadurch, dass das zumindest eine Kompensations-Bauteil bei einer ausgelenkten Stellung des Stellkörpers zumindest in die Nähe eines Permanentmagnet-Segments - optional mit dem Minimalabstand - kommt oder aber neben einem Permanentmagnet-Segment mit teilweiser Überdeckung gelegen ist. Die zuvor beschriebene magnetische Wechselwirkung zwischen zumindest einem Permanentmagnet-Segment und dem zumindest einen Kompensations-Bauteil wirkt der Rückstellkraft bzw. dem Rückstellmoment des Festkörpergelenks aufgrund dessen Auslenkung bzw. elastischer Verformung entgegen.

Bei allen erfindungsgemäßen Ausführungsformen der Antriebsvorrichtung kann, von der Stellkörper-Drehachse oder dem Zentrum des Stellkörpers aus gesehen, der Abstand zwischen dem zumindest einen Permanentmagnet-Segment und der Spule sehr gering sein, so dass zwischen diesen jeweils ein Restluftspalt besteht. Dadurch kann die Haltekraft oder Kompensationskraft optimiert und gegebenenfalls erhöht werden.

Bei den erfindungsgemäßen Ausführungsformen der Stellvorrichtung mit einer Anordnung von einem Paar von Permanentmagnet-Segmenten und optional zusätzlich einem weiteren Paar von Permanentmagnet-Segmenten, das auf einer zweiten Seite der Spule, die in Bezug auf die Spule entgegen gesetzt zu der ersten Seite gelegen ist, können die Permanentmagnet-Segmente identische Formen haben, die jeweils insbesondere, in der Spulenachse gesehen, durch deren den jeweiligen Außenumfang umgrenzenden Randlinien definiert sind. Generell kann vorgesehen sein, dass sich die der Spule zugewandten Oberflächen der Permanentmagnet-Segmente jeweils eines Paares von Permanentmagnet-Segmenten entlang oder in Richtung einer geraden Ebene erstrecken, in der das Zentrum Z des Stellkörpers und die Spulenachse gelegen sind.

Bei den erfindungsgemäßen Ausführungsformen der Stellvorrichtung kann insbesondere vorgesehen sein, dass die Orientierung der Permanentmagnet-Segmente jeweils eines Paares von Permanentmagnet-Segmenten oder jedes Paares von Permanentmagnet-Segmenten in der Spulenachse gesehen identisch sind. Diese Orientierungen werden hierin "Basis-Segmentorientierung" genannt.

Alternativ dazu kann vorgesehen sein, dass die Orientierung der Permanentmagnet-Segmente jeweils eines Paares von Permanentmagnet-Segmenten oder jedes Paares von Permanentmagnet-Segmenten in der Spulenachse gesehen, relativ zu der vorgenannten identischen Orientierung derselben zueinander, um einen Winkelbereich verdreht sind. Dabei kann vorgesehen sein, dass die Verdrehung jedes Permanentmagnet-Segments eines jeweiligen Paares jeweils in eine Richtung erfolgt, bei der eine Verlängerung einer Linie der der Spule zugewandten Oberfläche derselben, die in der Basis-Segmentorientierung in Richtung der Erstreckung der geraden Ebene verläuft, in der das Zentrum Z des Stellkörpers und die Spulenachse gelegen sind, auf der Seite des Zentrums des Stellkörpers auf das Zentrum zu bewegt wird. Dabei kann insbesondere die Drehung um die Spulenachse erfolgen. Der Betrag der Drehung von der Basis-Segmentorientierung aus kann in einem Bereich zwischen 0,1 Grad und 60 Grad liegen.

Durch diese Verdrehung der Permanentmagnet-Segmente eines Paares derselben relativ zu deren jeweiliger Basis-Segmentorientierung kann erreicht werden, dass die Effektivität der Stellvorrichtung bei größeren Stellbewegungen des Stellkörpers optimiert ist. Insbesondere kann auch eine Linearität oder annähernde Linearität der Veränderung der Haltekraft oder der Kompensationskraft in Abhängigkeit vom Stellwinkel des Stellkörpers erreicht werden.

Bei allen Ausführungsformen der Antriebsvorrichtung kann diese jedoch auch derart realisiert sein, dass im Bewegungsbereich der Relativbewegung zwischen Spule und dem zumindest einen Permanentmagnet-Segment keine Überlappung oder keine zumindest teilweise Überdeckung des Kompensations-Bauteils und eines des zumindest einen Permanentmagnet-Segments in der Spulenachse gesehen möglich ist und nicht erfolgt. Bei diesen Ausführungsformen wird eine Kompensationskraft oder eine Kompensationskraft, die dem Betrag nach wesentlich zur Kompensation der Rückstellkraft ist, ab einem vorbestimmten Maximalabstand eines Randpunkts des Außenumfangs des Kompensations-Bauteils und eines diesem nächstgelegenen Randpunkts des jeweiligen des zumindest einen Permanentmagnet-Segments erzeugt. Dabei kann auch vorgesehen sein, dass sich die Kompensationskraft bei Verkleinerung dieses Maximalabstands vergrößert, wenn sich die Randpunkte weiter einander annähern.

Auch bei den Ausführungsformen der Antriebsvorrichtung, bei denen eine Überlappung oder zumindest teilweise Überdeckung der Spule und dem zumindest einen Permanentmagnet-Segment realisierbar ist, kann die jeweilige Antriebsvorrichtung derart ausgeführt sein, dass die Rückstellkraft ab bereits einem solchen vorbestimmten Maximalabstand teilweise oder vollständig kompensiert wird und nicht erst bei Erreichen eines Verstellzustands der Stellvorrichtung, bei dem eine Überlappung oder zumindest teilweise Überdeckung der Spule und des zumindest einen Permanentmagnet-Segments gegeben ist.

Bei allen Ausführungsformen kann auch vorgesehen sein, dass die Kompensation der Rückstellkraft nur teilweise erfolgt, d.h. dass nur ein Bruchteil der Rückstellkraft von der Haltekraft zwischen zumindest einem Permanentmagnet-Segment und dem zumindest einen Kompensations-Bauteil kompensiert wird, so dass die Rückstellkraft nicht vollständig, sondern nur teilweise kompensiert wird.

Alternativ oder zusätzlich zu der vorgenannten Gestaltung und Anordnung des Kompensations-Bauteils kann bei jeder Ausführungsform der erfindungsgemäßen Stellvorrichtung oder des Aktors zumindest ein Kompensations-Bauteil derart gestaltet und angeordnet sein, dass, jeweils in der Spulenachse gesehen, zumindest in einem Abschnitt des Bewegungsbereichs des zumindest einen Permanentmagnet-Segments relativ zum Aktor das Kompensations-Bauteil zumindest abschnittsweise im Feldlinienbereich eines Permanentmagnet-Segments gelegen ist.

Alternativ zu den vorgenannten Gestaltungen und Anordnungen des Kompensations-Bauteils oder zusätzlich kann bei jeder Ausführungsform der erfindungsgemäßen Stellvorrichtung oder des Aktors zumindest ein Kompensations-Bauteil derart gestaltet und angeordnet sein, dass, jeweils in der Spulenachse gesehen, in einem Referenz-Zustand der jeweiligen Antriebsvorrichtung oder der Stellvorrichtung ein Abschnitt der Spule sich zumindest teilweise innerhalb des Permanentmagnet-Segments erstreckt, und sich dabei optional ein Permanentmagnet-Segment und das zumindest eine Kompensations-Bauteil in der Spulenachse gesehen nicht zumindest teilweise überdecken, und in einem von dem Referenz-Zustand aus verstellten Zustand der Stellvorrichtung sich zumindest ein Permanentmagnet-Segment und das Kompensations-Bauteil überlappen oder teilweise überdecken oder vollständig überdecken.

Bei den Ausführungsformen der erfindungsgemäßen Stellvorrichtung können, in Kombination mit ansonsten jeder der hierin beschriebenen Varianten der Stellvorrichtung vorgesehen sein, dass die Stellvorrichtung eine zweite Antriebsvorrichtung aufweist, so dass die Stellvorrichtung eine erste Antriebsvorrichtung und eine zweite Antriebsvorrichtung aufweist, die jeweils an eine Stellkörper-Anschlussvorrichtung des Stellkörpers gekoppelt sind, wobei sich die Anschlussvorrichtungen in Bezug auf die Festkörpergelenk-Drehachse symmetrisch gegenüber liegen.

Bei den Ausführungsformen der erfindungsgemäßen Stellvorrichtung kann, in Kombination mit ansonsten jeder hierin beschriebenen Varianten der Stellvorrichtung vorgesehen sein, dass die Stellvorrichtung ein zumindest abschnittsweise hohlring-förmiges Spulengehäuse aufweist, in dem die Spule angeordnet ist, wobei die Umfangsrichtung der Spule entlang der Umfangsrichtung des Spulengehäuses verläuft. Bei derartigen Ausführungsformen der erfindungsgemäßen Stellvorrichtung kann vorgesehen sein, dass zumindest ein Kompensations-Bauteil in der Spulenachse gesehen in dem von dem Spulengehäuse umlaufenen Außenraum angeordnet ist. Weiterhin kann bei derartigen Ausführungsformen der erfindungsgemäßen Stellvorrichtung vorgesehen sein, dass das Kompensations-Bauteil in der Spulenachse gesehen in dem außerhalb des äußeren Umfangs des Spulengehäuses gelegenen Außenraum angeordnet ist

Bei derartigen Ausführungsformen der erfindungsgemäßen Stellvorrichtung kann vorgesehen sein, dass zumindest eine Antriebsvorrichtung zumindest eine Anordnung von zwei Permanentmagnet-Segmenten, die vom Zentrum Z aus gesehen auf zumindest einer Seite der Spule gelegen sind, und ein Kompensations-Bauteil, das zumindest eine Seitenfläche, die jeweils einer Anordnung der Permanentmagnet-Segmente zugewandt gelegen ist, aufweist, wobei die Seitenfläche zwei geradflächige Teilfächenabschnitte aufweist, deren Orientierungen in einem Winkel zwischen 10 Grad und 40 Grad zu der Spulenachse verlaufen, wobei sich die Winkel in der Null-Lage oder im Referenz-Zustand vom Zentrum Z aus gesehen in eine Richtung öffnen, in der das jeweils näher gelegene Permanentmagnet-Segment der Anordnung von Permanentmagnet-Segmenten gelegen ist.

Bei den Ausführungsformen der erfindungsgemäßen Stellvorrichtung kann, in Kombination mit ansonsten jeder hierin beschriebenen Varianten der Stellvorrichtung vorgesehen sein, dass zumindest eine Antriebsvorrichtung jeweils zwei Permanentmagnet-Segmente aufweist, die auf einem Magnetsegment-Träger befestigt sind, wobei die Permanentmagnet-Segmente von der Stellkörper-Drehachse aus gesehen auf derselben Seite des Aktors gelegen und in der Richtung der Relativbewegung der Permanentmagnet-Segmente gegenüber der Spule hintereinander angeordnet sind.

Bei allen Ausführungsformen der erfindungsgemäßen Stellvorrichtung mit zumindest einer Antriebsvorrichtung mit einer Anordnung von zwei Permanentmagnet-Segmenten, die vom Zentrum Z des Stellkörpers aus gesehen auf einer der beiden zueinander entgegen gesetzt gelegenen Seiten der Spule angeordnet ist, kann das zumindest eine Kompensations-Bauteil jeweils eine der Anordnung der Permanentmagnet-Segmente zugewandte Seitenfläche aufweisen, die zwei insbesondere geradflächige oder sphärisch gekrümmte Teilfächenabschnitte aufweist, deren Orientierungen in einem Winkel zwischen 10 Grad und 40 Grad zu der Spulenachse verlaufen, wobei sich die Winkel in der Null-Lage oder im Referenz-Zustand vom Zentrum Z aus gesehen in eine Richtung öffnen, in der das jeweils näher gelegene Permanentmagnet-Segment der Anordnung von Permanentmagnet-Segmenten gelegen ist.

Bei den Ausführungsformen der erfindungsgemäßen Stellvorrichtung kann insbesondere in Kombination mit ansonsten jeder hierin beschriebenen Variante der Stellvorrichtung vorgesehen sein, dass eine Antriebsvorrichtung jeweils zwei Paare von Permanentmagnet-Segmenten aufweist, und ein erstes Paar von Permanentmagnet-Segmenten auf einem ersten Magnetsegment-Träger und ein zweites Paar von Permanentmagnet-Segmenten auf einem zweiten Magnetsegment-Träger angeordnet ist, wobei die Paare von Permanentmagnet-Segmenten von der Stellkörper-Drehachse aus gesehen auf zueinander entgegen gesetzt gelegenen Seiten des Aktors gelegen sind.

Bei allen Ausführungsformen der erfindungsgemäßen Stellvorrichtung mit zumindest einer Antriebsvorrichtung mit zwei Anordnungen von zwei Permanentmagnet-Segmenten, von denen jeweils eine vom Zentrum Z oder von der Stellkörper-Drehachse aus gesehen auf den zueinander entgegen gesetzt gelegenen Seiten der Spule angeordnet ist, kann das zumindest eine Kompensations-Bauteil jeweils zwei Seitenflächen aufweisen, die von der Stellkörper-Drehachse aus gesehen auf zueinander entgegen gesetzt gelegenen Seiten des Kompensations-Bauteils gelegen sind und auf denen jedes jeweils einer Anordnung der Permanentmagnet-Segmente zugewandt gelegen ist. Dabei kann jede der Seitenflächen zwei insbesondere geradflächige oder sphärisch gekrümmte Teilfächenabschnitte aufweisen, deren Orientierungen mit einem Winkel zwischen 10 Grad und 40 Grad zu der Spulenachse ausgerichtet sind, wobei sich die Winkel in der Null-Lage oder im Referenz-Zustand vom Zentrum Z aus gesehen in eine Richtung öffnen, in der das jeweils näher gelegene Permanentmagnet-Segment der Anordnung von Permanentmagnet-Segmenten gelegen ist.

Bei erfindungsgemäßen Ausführungsformen der Stellvorrichtung, bei denen zumindest eine Antriebsvorrichtung nur ein auf einer ersten Seite der Spule gelegenes Permanentmagnet-Segment und optional ein weiteres auf einer zweiten Seite der Spule, die in Bezug auf die Spule entgegen gesetzt zu der ersten Seite gelegen ist, angeordnetes Permanentmagnet-Segment aufweist und das, in der Spulenachse gesehen, auf derselben Höhe wie das auf der ersten Seite der Spule gelegene Permanentmagnet-Segment gelegen ist, kann das zumindest eine Kompensations-Bauteil jeweils eine dem jeweiligen Permanentmagnet-Segment zugewandte Seitenfläche aufweisen, die einen insbesondere geradflächigen oder sphärisch gekrümmten Teilfächenabschnitt aufweist, dessen Orientierungen in einem Winkel zwischen 10 Grad und 40 Grad zu der Spulenachse verlaufen, wobei sich die Winkel in der Null-Lage oder im Referenz-Zustand vom Zentrum Z aus gesehen in eine Richtung öffnen, in der das jeweilige Permanentmagnet-Segment gelegen ist.

Bei den Ausführungsformen der erfindungsgemäßen Stellvorrichtung kann, in Kombination mit ansonsten jeder hierin beschriebenen Varianten der Stellvorrichtung vorgesehen sein, dass die Stellvorrichtung zumindest einen oder mehrere der Sensoren (8a), (8b), (8c) aufweist:
(8a) einen Strommesser, der den Strom in der Spule erfasst,
(8b) einen Drehwinkel-Sensor, der in der Festkörper-Gelenkvorrichtung oder in einem der Festkörpergelenke eine Drehung zur Ermittlung einer Drehbewegung des Stellkörpers gegenüber dem Basis-Bauteil B1 erfasst,
(8c) einen im Aktor angeordneten Magnetfeldsensor, der die Stärke und die Richtung oder die Stärke oder die Richtung des Magnetfeldes in dem von der Spule umlaufenden Raum erfasst,
wobei die Stellvorrichtung eine Datenmanagement-Vorrichtung aufweist, die funktional mit dem zumindest einen jeweiligen Sensor gemäß (8a), (8b), (8c) verbunden ist und aufweist: eine Schnittstellen-Funktion, mit der Signale, die von dem zumindest einen Sensor erfasst werden, empfangen und zu speicherbaren Sensordaten umgewandelt und gespeichert werden, und eine Übermittlungs-Funktion, mit der die Sensordaten an eine Empfangsvorrichtung einer Auswertungs-Vorrichtung übermittelt werden.

Nach einem weiteren Aspekt der Erfindung ist ein Stellsystem mit einer Stellvorrichtung nach einer hierin beschriebenen Ausführungsform mit dem Strommesser, dem Drehwinkel-Sensor, dem Magnetfeldsensor und der Auswertungs-Vorrichtung vorgesehen, wobei die Auswertungs-Vorrichtung aufweist:
eine Empfangsfunktion, die die Sensordaten von der Übermittlungs-Funktion empfängt,
eine Auswertungsfunktion, die aus den Sensordaten einen Betriebszustands-Wert für die Stellvorrichtung zuordnet.

Bei einem derartigen Stellsystem kann nach der Erfindung vorgesehen sein, dass die Auswertungsfunktion eine Wartungsfunktion aufweist, die eine Mehrzahl von Sensordaten mit zumindest einem Sollwert vergleicht und bei Überschreitung oder Unterschreitung des Sollwertes den Betriebszustands-Wert erzeugt

Bei den Ausführungsformen des erfindungsgemäßen Stellsystems kann, in Kombination mit ansonsten jeder hierin beschriebenen Varianten des Stellsystems, vorgesehen sein, dass die Auswertungs-Vorrichtung eine Anzeige-Vorrichtung aufweist, die mit der Auswertungsfunktion funktional verbunden ist und den Betriebszustands-Wert anzeigt.

Bei den Ausführungsformen des erfindungsgemäßen Stellsystems kann, in Kombination mit ansonsten jeder hierin beschriebenen Varianten des Stellsystems vorgesehen sein, dass die Auswertungsfunktion zumindest einen Betriebszustands-Wert ermittelt, der auf der Anzeige-Vorrichtung einen oder mehrere der folgenden Betriebszustande der Stellvorrichtung anzeigt:
(Z1) die Stellvorrichtung befindet sich im Normalbetrieb;
(Z3) die Stellvorrichtung ist defekt;
(Z3) für die Stellvorrichtung ist eine Wartungsmaßnahme oder Sicherheitsüberprüfung fällig.

Bei den Ausführungsformen des erfindungsgemäßen Stellsystems kann, in Kombination mit ansonsten jeder hierin beschriebenen Varianten des Stellsystems vorgesehen sein, dass die Auswertungsfunktion eine Simulationsfunktion mit einem mathematischen Modell der Stellvorrichtung und mit einer Übertragungsfunktion aufweist, wobei die Übertragungsfunktion eine Mehrzahl von Sensordaten dem mathematischen Modell zuführt und das mathematische Modell aus den Sensordaten Stellzustandswerte einer oder mehrerer der folgenden Komponenten ermittelt:
(T1) der Antriebsvorrichtung
(T2) des Stellkörpers.

Nach einem weiteren Aspekt der Erfindung ist ein Computerprogrammprodukt vorgesehen, welches dazu ausgebildet ist, ein digitales Abbild einer erfindungsgemäßen Ausführungsform der Stellvorrichtung oder einer erfindungsgemäßen Ausführungsform des Stellsystems zu erzeugen.

Nach einem weiteren Aspekt der Erfindung ist ein Computerprogrammprodukt vorgesehen, das eine Auswertungsfunktion aufweist, die aus in der Stellvorrichtung ermittelten Sensordaten einen Betriebszustands-Wert für die Stellvorrichtung zuordnet,
wobei die Auswertungsfunktion eine Simulationsfunktion mit einem mathematischen Modell einer erfindungsgemäßen Ausführungsform der Stellvorrichtung und mit einer

Übertragungsfunktion aufweist, wobei die Übertragungsfunktion eine Mehrzahl von Sensordaten dem mathematischen Modell zuführt und das mathematische Modell aus den Sensordaten Stellzustandswerte einer mehrerer der folgenden Komponenten ermittelt:
(T1) der Antriebsvorrichtung
(T2) des Stellkörpers.

Bei jedem erfindungsgemäßen Computerprogrammprodukt kann das mathematische Modell der Stellvorrichtung derart ausgeführt sein, dass dieses aufgrund zumindest eines Eingangswertes für ein elektrisches Eingangssignals für die Spule Stellzustandswerte einer oder mehrerer der folgenden Komponenten ermittelt:
(T1) der Antriebsvorrichtung
(T2) des Stellkörpers.

Bei jedem erfindungsgemäßen Computerprogrammprodukt kann das mathematische Modell der Stellvorrichtung derart ausgeführt sein, dass das mathematische Modell der Stellvorrichtung Stellzustandswerte des Stellkörpers mit der Drehung des Stellkörpers um die Stellkörper-Drehachse relativ zu dem Basis-Bauteil mit funktionalem Einbezug des dynamischen Verhaltens des Festkörpergelenks aufgrund von Betätigungswerten der Antriebsvorrichtung ermittelt.

Bei jedem erfindungsgemäßen Computerprogrammprodukt kann das mathematische Modell der Stellvorrichtung derart ausgeführt sein, dass das mathematische Modell der Stellvorrichtung ein Antriebsvorrichtungs-Modell aufweist, das aufgrund zumindest eines Eingangswertes für ein Eingangssignal für die Spule Stellzustandswerte der Antriebsvorrichtung ermittelt.

Bei jedem erfindungsgemäßen Computerprogrammprodukt kann das mathematische Modell der Stellvorrichtung derart ausgeführt sein, dass das Antriebsvorrichtungs-Modell funktional das magnetische Zusammenwirken der Spule, des Kompensations-Bauteils und des Permanentmagnet-Segments aufgrund von Eingangswerten für ein Eingangssignal für die Spule definiert.

Ein elektrisches Eingangssignals aktiviert die Spule und erzeugt ein entsprechendes Magnetfeld.

Generell ermittelt das Simulationsmodell das dynamische Verhalten des Stellkörpers oder Stellzustandswerte des Stellkörpers in Abhängigkeit eines elektrischen Eingangssignals für die Spule. Das elektrischen Eingangssignal kann insbesondere definiert sein kann durch:
(E1) eine in der Spule fließender elektrischer Strom,
(E2) eine an der Spule angelegten Spannung,
(E3) durch einen zeitlichen Verlauf eines in der Spule fließenden elektrischen Stroms,
(E4) durch einen zeitlichen Verlauf einer an der Spule angelegten Spannung,
(E5) eine Kombination der Alternativen (E1 bis (E4).

In dieser Hinsicht kann jede der Ausführungsformen der Stellvorrichtung eine Ansteuerungsvorrichtung aufweisen, die an die Spule angeschlossen ist und bei Aktivierung derselben ein Eingangssignal für die Spule und insbesondere einen in der Spule fließenden elektrischen Strom bewirkt.

Generell können hierin als Betriebszustands-Wert oder Stellzustandswert der Antriebsvorrichtung definiert sein:
(E6) ein Stellweg zumindest eines Permanentmagnet-Segments,
(E7) ein Relativbewegungs-Abstand zwischen zumindest einem Permanentmagnet-Segment und der Spulenachse,
(E8) ein Stellweg einer der jeweiligen Antriebsvorrichtung zugeordneten Anschlussvorrichtung,
(E9) eine Kombination mehrerer der Alternativen (E6) bis (E8).

Generell können hierin als Stellzustandswerte des Stellkörpers definiert sein:
(E10) eine Drehstellung des Stellkörpers,
(E11) eine Drehgeschwindigkeit des Stellkörpers,
(E12) eine Kombination mehrerer der Alternativen (E10) bis (E11).

Hierin bedeutet der Ausdruck "magnetisiert" in Bezug auf ein Kompensations-Bauteil, dass das Kompensations-Bauteil vor Einbau in die jeweilige Stellvorrichtung oder vor Beginn einer Aktuierung einer jeweiligen Antriebsvorrichtung in spezifischer Weise magnetisiert worden ist, z.B. bei der Herstellung des Kompensations-Bauteils.

Hierin bedeutet der Ausdruck "magnetisierbar" in Bezug auf ein Kompensations-Bauteil, dass das Kompensations-Bauteil unter Einwirkung eines äußeren Magnetfelds in spezifischer Weist magnetisiert wird. Insbesondere bedeutet der Ausdruck "magnetisierbar" in Bezug auf ein Kompensations-Bauteil, dass diese in einem in die Stellvorrichtung eingebauten Zustand unter Einwirkung eines Permanentmagnet-Segments derselben in einen magnetischen Zustand versetzt wird, der Anteil an der Erzeugung der Haltekraft hat. Weiterhin kann insbesondere der Ausdruck "magnetisierbar" in Bezug auf ein Kompensations-Bauteil bedeuten, dass dieses vor Einbau in die jeweilige Stellvorrichtung nicht in spezifischer Weise magnetisiert worden ist, z.B. bei der Herstellung des Kompensations-Bauteils.

Das Material eines magnetisierten Kompensations-Bauteils und das Material eines magnetisierbaren Kompensations-Bauteils kann jeweils aus einem weichmagnetischen Material gebildet sein oder aus einem weichmagnetischen Material bestehen.

Das Material eines magnetisierten Kompensations-Bauteils kann aus einem hartmagnetischen Material gebildet sein oder aus einem hartmagnetischen Material bestehen.

Der Begriff "weichmagnetisch" wird für Materialien verwendet, die sich nicht dauerhaft magnetisieren lassen. Aufgrund ihrer hohen magnetischen Permeabilität kann jedoch durch Positionsänderung eines entsprechenden Elements in einem äußeren Magnetfeld eine auf das aus weichmagnetischem Material bestehende Element einwirkende Kraft erzielt werden.

Der Begriff "hartmagnetisch" wird für Materialien verwendet, welche nach dem Aufmagnetisieren ein dauerhaftes inneres Magnetfeld beibehalten. Durch dieses innere Magnetfeld kann bei Wechselwirkung mit einem äußeren Magnetfeld eine Kraftwirkung aufgrund des Prinzips der Energieminimierung erzielt werden

Nach der Erfindung kann ein Kompensations-Bauteil, wenn dieses aus einem weichmagnetischen Material gebildet ist, insbesondere aus folgenden Materialien gebildet sein:
(w1) Das weichmagnetische Material basiert auf einem Metall, das insbesondere die ferromagnetischen Metalle und dabei speziell eines oder mehrere der folgenden Metalle aufweist: Eisen, Cobalt oder Nickel. Dabei kann das weichmagnetische Material eine kristalline Legierung, eine amorphe Legierung oder eine nanokristalline Legierung aufweisen.
(w2) Das weichmagnetische Material ist aus einem keramischen Werkstoff und insbesondere einem Ferrit gebildet.
(w3) Das weichmagnetische Material ist aus einer Kombination von in (w1) und (w2) genannten Materialien oder Stoffen gebildet.

Der Ausdruck "Relativbewegungs-Richtung" bedeutet hierin insbesondere die oder eine Richtung der Relativbewegung zwischen Spule und Permanentmagnet-Segment bei Aktuierung einer jeweiligen Antriebsvorrichtung.

Der Ausdruck "entlang" bedeutet hierin im Zusammenhang einer hierin genannten Richtungsangabe, die insbesondere auch den Verlauf einer Konturlinie oder einer Oberfläche oder eine Richtung eines Bauteils oder einer Strukturkomponente wie eine Achse oder eine Welle oder eine Mittelachse derselben betreffen kann, in Bezug auf eine Bezugsrichtung oder eine Bezugsachse, dass ein Abschnitt des Verlaufs oder die Tangente an eine jeweilige Konturlinie oder jeweilige Oberfläche oder die Richtung in einer explizit oder implizit vorgegebenen Blickrichtung lokal oder abschnittsweise mit einem Winkel von maximal 45 Grad und Insbesondere von maximal 30 Grad von der jeweiligen Bezugsrichtung bzw. Bezugsachse abweicht, auf die die jeweilige Richtungsangabe bezogen ist.

Der Ausdruck "quer" bedeutet hierin im Zusammenhang einer hierin genannten Richtungsangabe, die insbesondere auch den Verlauf einer Konturlinie oder einer Oberfläche oder eine Richtung eines Bauteils oder einer Strukturkomponente wie eine Achse oder eine Welle oder eine Mittelachse derselben betreffen kann, in Bezug auf eine Bezugsrichtung oder eine Bezugsachse, dass ein Abschnitt des Verlaufs oder die Tangente an eine jeweilige Konturlinie oder jeweilige Oberfläche oder die Richtung in einer explizit oder implizit vorgegebenen Blickrichtung lokal oder abschnittsweise mit einem Winkel, der zwischen 45 Grad und 135 Grad beträgt, und vorzugsweise mit einem Winkel, der zwischen 67 Grad und 111 Grad beträgt, von der jeweiligen Bezugsrichtung bzw. Bezugsachse abweicht, auf die die jeweilige Richtungsangabe bezogen ist.

Unter dem Begriff "Abstand" insbesondere zwischen zwei Flächen wird hierin insbesondere der kürzeste Abstand verstanden.

Eine "Längsrichtung" oder eine andere Referenzrichtung einer Referenzlinie, wie insbesondere einer zentralen Achse oder einer mittig verlaufenden Linie oder einer Mittellinie zumindest einer Strukturkomponente oder eines Bauteils, und insbesondere einer Führungsbahn oder Führungskomponente bei einer Relativbewegung ergibt sich hierin insbesondere als Verbindungslinie der Flächenschwerpunkte der jeweils kleinsten Querschnittsflächen der jeweiligen Strukturkomponente entlang einer ermittelten oder vorgegebenen Richtung wie z.B. der Relativbewegung oder zwischen zwei ermittelten oder vorgegebenen Enden, die sich aus der Relativbewegung ergeben kann. In dem Fall, dass die Referenzlinie gekrümmt oder zumindest abschnittsweise gekrümmt verlaufen kann, kann die Referenzrichtung generell als lokale Längsrichtung zu verstanden werden. Dabei kann die Referenzrichtung hierin jedoch auch als die Richtung einer geradlinig definierten Referenzlinie verstanden werden, wobei zur Ermittlung der geradlinigen Referenzlinie aus einer gekrümmten Linie eine Linie verwendet wird, deren Lage relativ zu der gekrümmten Linie im Verlauf innerhalb der jeweiligen Strukturkomponente in der Summe die geringste Abweichung zwischen diesen Linien oder die geringste Abweichungsfläche ergibt. Dasselbe gilt, falls hierin eine geradlinige Referenzlinie aus einer gekrümmten Linie abzuleiten ist.

Unter dem Begriff "Zentrum" in Bezug auf in Bauteil oder eine Komponente wird hierin insbesondere der Massenschwerpunkt oder der geometrische Schwerpunkt des Bauteils oder der Komponente verstanden. Für den Stellkörper kann das Zentrum insbesondere der Mittelpunkt der Länge der Stellkörper-Drehachse sein, mit der sich diese durch den Stellkörper oder den Stellkörper-Rahmen durch erstreckt.

Zu einer Aktuierung der erfindungsgemäßen Stellvorrichtung wird die Spule eines Aktors elektrisch angesteuert, so dass diese ein Magnetfeld erzeugt. Das magnetische Zentrum des Magnetfelds, das im Inneren oder Innenraum der Spule gelegen ist, oder dessen zentrale Feldlinie im Inneren der Spule wird hierin als Spulen-Achse AS definiert.

Unter der Bezeichnung "im Wesentlichen" in Bezug auf einen Wert oder ein Verhältnis wird hierin insbesondere verstanden, dass das Merkmal eine Abweichung von 20 % und speziell von 10 % von dem Merkmal oder dessen geometrischen Eigenschaft bzw. des Werts enthält.

Unter der Bezeichnung "im Wesentlichen" in Bezug auf einen Vergleich einer Form oder einer Gestalt einer Komponente mit einer Referenzangabe, z.B. rechteckförmig, bedeutet hierin, dass die Linie oder die Gestalt mit der Referenzangabe abschnittsweise übereinstimmt. Z.B. kann "im Wesentlichen rechteckförmig" bedeuten, dass einzelne oder sämtliche Abschnitte, die Ecken des Rechtsecks aufweisen, als gerundete Abschnitte gestaltet sind.

Unter einem "gekrümmten Verlauf" einer Linie oder Kante oder Oberfläche ist gemeint, dass die Oberfläche entlang einer Referenzrichtung gesehen über die gesamte quer zur Referenzrichtung verlaufende Breite keine Ecke aufweist, d.h. differenzierbaren Verlauf hat.

Unter "Orientierung" in Bezug auf eine Fläche und insbesondere Oberfläche wird hierin die Normale auf die jeweilige Oberfläche verstanden. Für den Fall, dass es sich bei der betreffenden Oberfläche nicht um eine gerade, sondern beispielsweise eine gekrümmte Oberfläche handelt, kann zur Ermittlung der Oberflächen-Normalen die Normale auf eine gerade Oberfläche derselben Größe verwendet werden, für deren Lage sich relativ zu gekrümmten Oberfläche in der Summe die geringste Abweichung ergibt.

Unter einer "Erstreckung" eines Flächenabschnitts wird eine Richtung eines ebenen Flächenabschnitts verstanden, der entlang des in Bezug genommenen Flächenabschnitts verläuft und in Bezug zu diesem eine derartige Lage hat, bei der die Summe der Abweichungsbeträge zwischen beiden Flächenabschnitten minimal ist. In Bezug auf einen Längenbetrag der Erstreckung eines Flächenabschnitts wird hierin eine Länge eines fiktiven Flächenabschnitts derselben Größe in einer zu definierenden Richtung verstanden, der eine Lage hat relativ zu dem referenzierten Flächenabschnitt hat, bei der die Summe der Abweichungsbeträge zwischen beiden Flächenabschnitten minimal ist.

Unter dem Begriff "einstückig" in Bezug auf ein Bauteil oder eine Komponente wird hierin verstanden, dass das Bauteil bzw. die Komponente als ein Stück hergestellt ist. Dabei kann das Bauteil bzw. die Komponente aus mehreren Stücken oder Teilen, die zusammenhängen oder aneinander gekoppelt oder miteinander verbunden sind, gebildet sein. Unter dem Begriff "aus einem Stück hergestellt" wird in dieser Hinsicht verstanden, dass das Bauteil bzw. die Komponente bei seiner Herstellung aus einem einstückigen Ausgangswerkstück hergestellt ist.

Unter "Position" einer Komponente oder eines Bauteils kann hierin insbesondere die Position des Masseschwerpunkts oder des geometrischen Schwerpunkts der jeweiligen Komponente oder des jeweiligen Bauteils verstanden werden.

Unter "Hohlring" wird hierin eine umlaufend geschlossene Komponente verstanden, die mit ihren Außenflächen einen Außenraum umschießt und im Inneren hohl ist, also mit ihren Innenfläche einen ringfömigen Raum begrenzt. Eine als Hohlring gestaltete Komponente kann als Schale ausgeführt sein. In einer Blickrichtung von der Seite auf die Hohlring-Komponente kann diese kreisringförmig oder in einer anderen Form gestaltet sein. Die Form des Hohlrings ist durch den Verlauf der Mittellinie des vom Hohlring begrenzten Innenraums beschreibbar. Z.B. kann der Hohlring derart geformt sein, dass dessen Innenraum-Mittellinie im Wesentlichen rechteckförmig verläuft. Die Bezeichnung "Ring" in diesem Zusammenhang bedeutet lediglich, dass der Hohlring umlaufend geschlossen ist, aber definiert keine weitere Eigenschaft des Hohlrings.

Ein "Überlappen von einem Permanentmagnet-Segment und einem jeweils betroffenen Abschnitt der Spule" oder ein "Abstand zwischen einem Permanentmagnet-Segment und einem Abschnitt der Spule" bezieht sich hierin jeweils auf den Außenumfang des jeweiligen Permanentmagnet-Segments und den Außenumfang der Spule oder den Außenumfang eines Abschnitts der Spule und ergibt sich jeweils in einer Blickrichtung in Richtung der Spulenachse AS. Hierin bedeutet das Überlappen ein teilweises Überdecken eines jeweiligen Permanentmagnet-Segments und eines jeweils betroffenen Abschnitts der Spule.

Im Folgenden werden Ausführungsformen der Erfindung an Hand der beiliegenden Figuren beschrieben. Hierin ist die Beschreibung von Merkmalen oder Komponenten von erfindungsgemäßen Ausführungsformen so zu verstehen, dass eine betreffende Ausführungsform erfindungsgemäß, sofern dies nicht explizit ausgeschlossen ist, auch zumindest ein Merkmal einer anderen Ausführungsform aufweisen kann, jeweils als zusätzliches Merkmal dieser betreffenden Ausführungsform oder als alternatives Merkmal, das ein anderes Merkmal dieser betreffenden Ausführungsform ersetzt. Die Figuren zeigen:

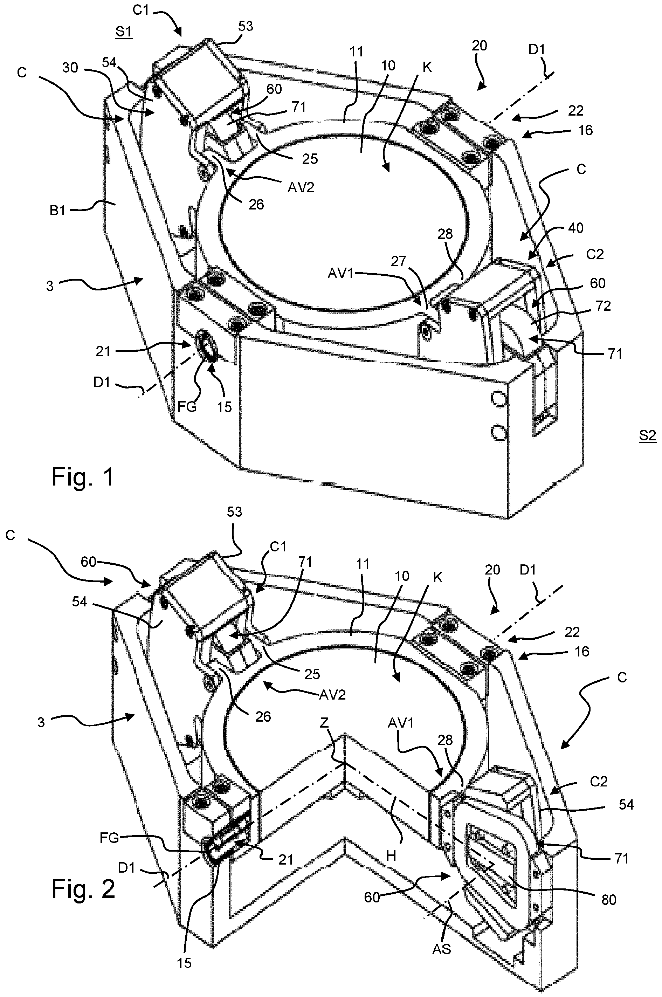

Figur 1 eine perspektivische Darstellung einer Ausführungsform der erfindungsmäßen Stellvorrichtung mit einem Basis-Bauteil in Gestalt eines Stellkörper-Gehäuses, mit einem Stellkörper, der mittels einer Festkörper-Gelenkvorrichtung an dem Stellkörper-Gehäuse drehbar gelagert ist, und mit zwei Antriebsvorrichtungen zur Verstellung des Stellkörpers, wobei jede Antriebsvorrichtung einen Aktor mit einem Hohlring-förmigen Spulengehäuse, in dem sich eine Spule in ihrer Umfangsrichtung erstreckt, und mit einem Kompensations-Bauteil und eine relativ zum Aktor bewegbare Anordnung von Ferromagnet-Segmenten aufweist,
Figur 2 eine weitere perspektivische Darstellung der in der Figur 1 gezeigten Ausführungsform der erfindungsmäßen Antriebsvorrichtung, wobei die Antriebsvorrichtung teilweise aufgeschnitten ist,
Figur 3 eine perspektivische Darstellung der Kombination des Stellkörpers mit zwei daran befestigten Anordnungen von Magnetsegmenten zur Ausbildung jeweils einer Antriebsvorrichtung,
Figur 4 eine perspektivische Darstellung einer Variante einer Antriebsvorrichtung zur Integration in eine Ausführungsform der erfindungsmäßen Stellvorrichtung, wobei die Antriebsvorrichtung in einem Referenz-Zustand oder einer Ausgangsstellung gezeigt ist,
Figur 5 die Variante einer Antriebsvorrichtung gemäß Figur 4 in perspektivischer Darstellung, wobei die Antriebsvorrichtung in einem ersten Verstell-Zustand gezeigt ist,
Figur 6 die Variante einer Antriebsvorrichtung gemäß Figur 4 in perspektivischer Darstellung, wobei die Antriebsvorrichtung in einem zweiten Verstell-Zustand gezeigt ist,
Figur 7 eine schematische Seitendarstellung der Spule einer Ausführungsform der Antriebsvorrichtung der erfindungsgemäßen Stellvorrichtung mit Linien zur Definition der Gestalt des Spulengehäuses mit der Spule, wobei die Antriebsvorrichtung nach den Figuren 4 bis 6 gebildet ist und wobei sich die Antriebsvorrichtung in einem Referenz-Zustand oder einer Nulllage befindet,
Figur 8 eine perspektivische Darstellung des Stellkörpers und seitlich daran befestigten Permanentmagnet-Segmenten einer Ausführungsform der erfindungsgemäßen Stellvorrichtung,
Figur 9 eine Explosionsdarstellung einer Antriebsvorrichtung mit einer Variante des Kompensations-Bauteils,
Figur 10 eine perspektivische Darstellung der Antriebsvorrichtung nach der Figur 9,
Figur 11 eine perspektivische Darstellung einer Variante des Aktors zur Integration in eine Ausführungsform der erfindungsmäßen Stellvorrichtung,
Figur 12 eine Explosionsdarstellung der Variante des Aktors der Figur 11,
Figur 13 eine Explosionsdarstellung einer Variante der Antriebsvorrichtung mit der Variante des Aktors der Figur 11 bzw. Figur 12,
Figur 14 eine perspektivische Darstellung der Komponenten der Antriebsvorrichtung der Figur 13,
Figur 15 eine Explosionsdarstellung einer Antriebsvorrichtung mit einer Variante des Kompensations-Bauteils,
Figur 16 eine perspektivische Darstellung der Antriebsvorrichtung gemäß Figur 15,
Figur 17 eine Explosionsdarstellung einer Antriebsvorrichtung mit zwei Kompensations-Bauteilen in spezieller Ausführung,
Figur 18 eine perspektivische Darstellung der Antriebsvorrichtung gemäß Figur 17,
Figur 19 eine schematische Schnittdarstellung der Ausführungsform der Antriebsvorrichtung der Figur 13, wobei das Kompensations-Bauteil aus einem weichmagnetischen Material gebildet ist und die Antriebsvorrichtung zwei Paare von Permanentmagnet-Segmenten aufweist, wobei die Antriebsvorrichtung in einem Referenz-Zustand mit gleichzeitiger Darstellung von berechneten bzw. simulierten Magnetfeldlinien gezeigt ist,
Figur 20 die Ausführungsform der Antriebsvorrichtung der Figur 19 in der darin gezeigten Schnittdarstellung, wobei die Antriebsvorrichtung in einem ersten Verstell-Zustand oder Relativbewegungs-Zustand mit gleichzeitiger Darstellung von berechneten bzw. simulierten Magnetfeldlinien gezeigt ist,
Figur 21 die Ausführungsform der Antriebsvorrichtung der Figur 19 in der darin gezeigten Schnittdarstellung, wobei die Antriebsvorrichtung in einem zweiten Verstell-Zustand oder Relativbewegungs-Zustand mit gleichzeitiger Darstellung von berechneten bzw. simulierten Magnetfeldlinien gezeigt ist,
Figur 22 eine Explosionsdarstellung einer Variante der Antriebsvorrichtung mit dem Aktor nach den Figuren 11 und 12,
Figur 23 eine schematische Schnittdarstellung einer Ausführungsform der Antriebsvorrichtung der Figur 22, wobei das Kompensations-Bauteil aus einem hartmagnetischen Material gebildet ist und die Antriebsvorrichtung zwei Paare von Permanentmagnet-Segmenten aufweist, wobei die Antriebsvorrichtung in einem Referenz-Zustand mit gleichzeitiger Darstellung von berechneten bzw. simulierten Magnetfeldlinien gezeigt ist,
Figur 24 die Ausführungsform der Antriebsvorrichtung der Figur 23 in der darin gezeigten Schnittdarstellung, wobei die Antriebsvorrichtung in einem ersten Verstell-Zustand oder Relativbewegungs-Zustand mit gleichzeitiger Darstellung von berechneten bzw. simulierten Magnetfeldlinien gezeigt ist,
Figur 25 die Ausführungsform der Antriebsvorrichtung der Figur 23 in der darin gezeigten Schnittdarstellung, wobei die Antriebsvorrichtung in einem zweiten Verstell-Zustand oder Relativbewegungs-Zustand mit gleichzeitiger Darstellung von berechneten bzw. simulierten Magnetfeldlinien gezeigt ist,

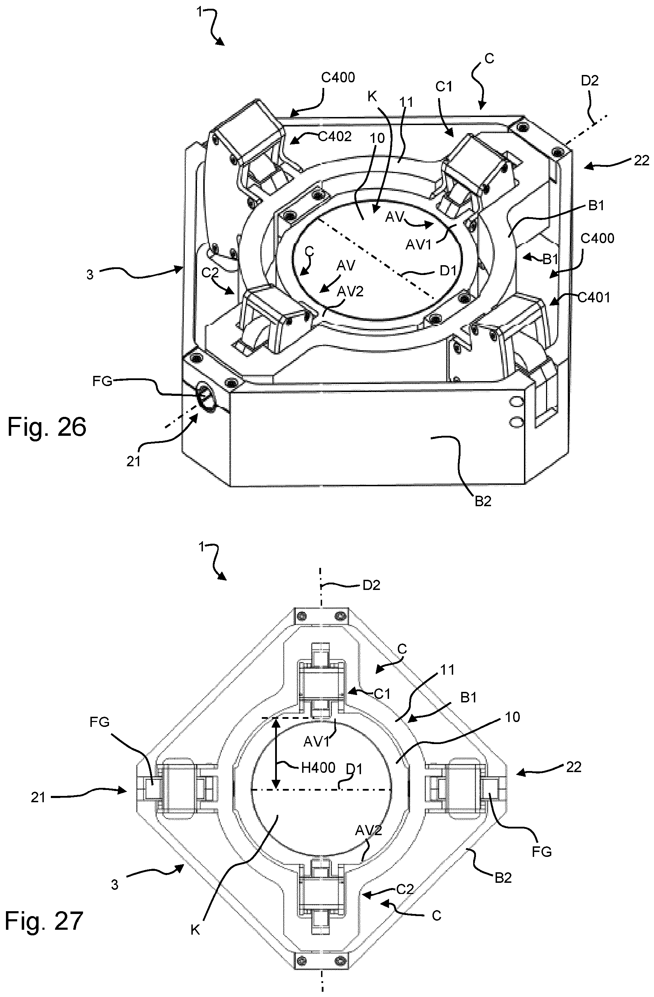

Figur 26 eine perspektivische Darstellung einer weiteren Ausführungsform der erfindungsmäßen Stellvorrichtung mit einem ersten Basis-Bauteil in Gestalt eines Stellkörper-Gehäuses, mit einem Stellkörper, der mittels einer Festkörper-Gelenkvorrichtung an dem Stellkörper-Gehäuse drehbar gelagert ist, und mit zwei Antriebsvorrichtungen zur Verstellung des Stellkörpers, einem zweiten Basis-Bauteil, in dem das ersten Basis-Bauteil mittels einer weiteren Festkörper-Gelenkvorrichtung drehbar aufgenommen ist und das mittels zwei Antriebsvorrichtungen drehbar ist, wobei jede Antriebsvorrichtung einen Aktor mit einem Hohlring-förmigen Spulengehäuse, in dem sich eine Spule in ihrer Umfangsrichtung erstreckt, und mit einem Kompensations-Bauteil und eine relativ zum Aktor bewegbare Anordnung von Ferromagnet-Segmenten aufweist,
Figur 27 eine Draufsicht auf die Ausführungsform der Stellvorrichtung der Figur 26,
Figur 28 eine teilweise aufgeschnittene perspektivische Darstellung der Ausführungsform der Stellvorrichtung der Figur 26, und
Figur 29 eine weitere teilweise aufgeschnittene perspektivische Darstellung der Ausführungsform der Stellvorrichtung der Figur 26.

Die erfindungsgemäße Stellvorrichtung 1 weist zumindest eine elektromagnetische Antriebsvorrichtung C auf, mit der eine Aktuierung von Bewegungen eines Stellkörpers 10 gegenüber einem Basis-Bauteil B1 in zumindest einer Stellbewegungsrichtung realisiert werden kann. Das Basis-Bauteil kann z.B. ein Stellkörper-Gehäuse oder eine Rahmen-Vorrichtung sein.

Die Figur 1 zeigt eine Ausführungsform der erfindungsmäßen Stellvorrichtung 1 mit dem Basis-Bauteil in Form eines Stellkörper-Gehäuses 3 und dem Stellkörper 10. Der Stellkörper 10 ist mittels einer Festkörper-Gelenkvorrichtung 20 in Form eines ersten Festkörpergelenks 21 und eines zweiten Festkörpergelenks 22 an dem Stellkörper-Gehäuse 3 unter Bereitstellung einer Stellkörper-Drehachse D1 drehbar gelagert. Die zwei Festkörpergelenke 21, 22 sind an einem Stellkörper-Rahmen 11 in Richtung der Stellkörper-Drehachse D1 diametral gegenüber liegend angeordnet. Insbesondere kann die Stellkörper-Drehachse D1 parallel zu einer Symmetrieachse des Stellkörpers 10 verlaufen.

Dazu alternativ kann bei jeder Ausführungsform der erfindungsgemäßen Stellvorrichtung 1 vorgesehen sein, dass diese nur ein Festkörpergelenk aufweist. Dabei kann vorgesehen sein, dass der Stellkörper 10 insbesondere mittels nur eines der beiden Festkörpergelenke 21, 22 an dem Stellkörper-Gehäuse 3, das die Stellkörper-Drehachse D1 definiert, gelagert ist.

An dem Stellkörper-Rahmen 11 kann eine Anwendungskomponente K angeordnet werden. Die Anwendungskomponente K kann von dem Stellkörper-Rahmen 11 aufgenommen oder auf diesem gelegen sein. Die Anwendungskomponente K kann insbesondere eine oder mehrere der folgenden Komponenten oder eine Kombination der folgenden Komponenten sein: ein Sensor, eine Sensoraufnahme, ein Werkzeug wie z.B. ein Spiegel, eine Werkzeugaufnahme.

Hierin wird für den Stellkörper 10 ein Zentrum Z definiert. Das Zentrum Z kann insbesondere der Mittelpunkt der Länge der Stellkörper-Drehachse D1 sein, die sich durch den Stellkörper 10 oder den Stellkörper-Rahmen 11 erstreckt.

Das erfindungsgemäß jeweils vorgesehene Festkörpergelenk kann nach dem Stand der Technik ausgeführt sein. Unter dem Begriff "Festkörpergelenk" wird hierin ein spezifisch ausgebildeter Verbindungabschnitt zwischen einer ersten Komponente und einer zweiten Komponente verstanden, der aufgrund elastischer und reversibler, d.h. nicht plastischer, Verformung eine Relativbewegung zwischen erster und zweiter Komponente erlaubt. Der Verbindungsabschnitt weist eine wesentlich verminderte Biegesteifigkeit relativ zu dem an den Verbindungsabschnitt angrenzenden Bereich der ersten und zweiten Komponente auf. Die verminderte Biegesteifigkeit kann durch eine lokale Querschnittsverringerung des Verbindungsabschnitts oder eine spezielle Formgebung des Verbindungsabschnitts oder eine größere Elastizität des Materials des Verbindungsabschnitts erreicht werden.

Jedes der Festkörpergelenke 21 oder 22 kann jeweils ein Achsteil FG aufweisen, das mit einem ersten Endstück an jeweils einer Drehlagerungsaufnahme 15, 16 des Stellkörper-Rahmens 11 fixiert ist. Die Drehlagerungsaufnahmen 15, 16 sind in Richtung der Stellkörper-Drehachse D1 diametral gegenüber liegend angeordnet. Die Achsteile FG sind jeweils mit einem zweiten Endstück, das entgegen gesetzt zu dem ersten Endstück gelegen sind, an einer entsprechenden Gehäuseaufnahme fixiert. In dem Fall, dass die Stellvorrichtung 1 nur eines der Festkörpergelenke 21, 22 aufweist, kann vorgesehen sein, dass die Stellvorrichtung 1 auch nur ein Achsteil FG aufweist.

Ein jeweils vorgesehenes Festkörpergelenk kann auch auf andere Weise als mit einem Achsteil FG realisiert sein.

Das Achsteil FG kann den Verbindungsabschnitt selbst ausbilden. Auch kann das Achsteil FG einen zylindrischen Basiskörper und den mit diesem verbundenen und in dessen Inneren angeordneten Verbindungsabschnitt aufweisen, der sich beispielsweise radial von dem Basiskörper nach innen erstreckt und an dem die Gehäuseaufnahme angebracht oder fixiert ist.

Der Stellkörper-Rahmen 11 wird durch eine Antriebsvorrichtung C oder mehrere Antriebsvorrichtungen C in eine Dreh- oder Kippbewegung versetzt. Eine Antriebsvorrichtung C ist einerseits an jeweils eine Anschlussvorrichtung AV des Stellkörpers 10 oder dessen Stellkörper-Rahmen 11 und andererseits an eine Aufnahmevorrichtung des Basis-Bauteils oder des Stellkörper-Gehäuses 3 gekoppelt. Jede der zumindest einen Stellkörper-Anschlussvorrichtung AV ist in einem Abstand H zu der Stellkörper-Drehachse D1 gelegen. Jede der zumindest einen Antriebsvorrichtung C ist an das Basis-Bauteil B1 und an eine Stellkörper-Anschlussvorrichtung AV gekoppelt, so dass jede der zumindest einen Antriebsvorrichtung C bei ihrer Aktuierung eine Stellbewegung erzeugt, die in einem Abstand H von der Stellkörper-Drehachse D1 gelegen ist, so dass eine Stellbewegung entlang eines Stellwegs eine Drehung bzw. Kippung des Stellkörpers 10 um die Stellkörper-Drehachse D1 bewirkt. Die in den Figuren 1 und 2 gezeigte erfindungsgemäße Ausführungsform der Stellvorrichtung 1 weist zwei Antriebsvorrichtungen C auf, denen einzeln jeweils das Bezugszeichen C1 und C2 zugeordnet sind. Die Antriebsvorrichtung C1 ist an die Stellkörper-Anschlussvorrichtung AV1 gekoppelt, während die Antriebsvorrichtung C2 ist an die Stellkörper-Anschlussvorrichtung AV2 gekoppelt ist.

Nach einer weiteren Ausführungsform der erfindungsgemäßen Stellvorrichtung weist diese nur eine Antriebsvorrichtung C auf, die an eine Stellkörper-Anschlussvorrichtung AV des Stellkörpers 10 gekoppelt ist, die in einem Abstand H von der Stellkörper-Drehachse D1 gelegen ist. Nach einer weiteren Ausführungsform der erfindungsgemäßen Stellvorrichtung weist diese mehrere Antriebsvorrichtungen C auf, die jeweils an eine Stellkörper-Anschlussvorrichtung AV des Stellkörpers 10 gekoppelt ist, die auf derselben Seite der Stellkörper-Drehachse D1 in einem Abstand H von der Stellkörper-Drehachse D1 gelegen sind.

Zur Kopplung einer Antriebsvorrichtung C an den Stellkörper-Rahmen 11 weist die Stellvorrichtung 1 bei der Ausführungsform der Stellvorrichtung 1 nach den Figuren 1 und 2 mit zwei Antriebsvorrichtungen C1, C2 zwei Stellkörper-Anschlussvorrichtungen AV auf. Die Stellkörper-Anschlussvorrichtungen AV sind in Bezug auf die Stellkörper-Drehachse D1 auf zueinander entgegen gesetzt gelegenen Bereichen des Stellkörper-Rahmens 11 angeordnet. Jede der Stellkörper-Anschlussvorrichtungen AV ist jeweils durch zwei Stellkörper-Anschlussabschnitte realisiert. Demgemäß sind an einer ersten Seite S1 des Stellkörper-Rahmens 11 zwei Stellkörper-Anschlussabschnitte 25, 26 und an einer zweiten Seite S2 des Stellkörper-Rahmens 11, die in Bezug auf die Stellkörper-Drehachse D1 der ersten Seite S1 gegenüber liegt, zwei Stellkörper-Anschlussabschnitte 27, 28 gelegen, die jeweils mit dem Stellkörper-Rahmen 11 verbunden sind und dabei insbesondere einstückig mit dem Stellkörper-Rahmen 11 ausgebildet sein können. Die Stellkörper-Anschlussabschnitte 25, 26, 27, 28 stehen jeweils von dem Stellkörper-Rahmen 11 in radialer Richtung ab. Jede der Stellkörper-Anschlussabschnitte 25, 26, 27, 28 kann eine Verbindungsvorrichtung, z.B. in Form von zumindest einer Bohrung, zum Anschluss einer Antriebsvorrichtung C aufweisen.

Alternativ dazu kann eine oder mehrere der zumindest einen Stellkörper-Anschlussvorrichtung AV durch nur einen derartig abstehenden Stellkörper-Anschlussabschnitt realisiert sein. Eine Stellkörper-Anschlussvorrichtung AV kann auch durch eine im Stellkörper-Rahmen 11 eingebrachte Verbindungsvorrichtung realisiert sein. Zudem kann die Stellkörper-Anschlussvorrichtung AV ein Abschnitt des Stellkörper-Rahmens 11 selbst sein.

Bei einer zu den gezeigten Ausführungsformen alternativen Ausführungsform der Stellvorrichtung 1 weist diese nur eine Antriebsvorrichtung C und dabei nur eine Stellkörper-Anschlussvorrichtung AV auf.

Im Folgenden werden Ausführungsformen der Antriebsvorrichtungen C beschrieben, die in jeder der Ausführungsformen des erfindungsgemäßen Stellvorrichtung 1 integriert sein können. In den Figuren sind für jede der verschiedenen dargestellten Antriebsvorrichtungen C dieselben Bezugszeichen verwendet. Bei verschiedenen Ausführungsformen der Antriebsvorrichtungen C werden für Merkmale oder Komponenten mit gleicher Funktion dieselben Bezugszeichen verwendet.

Die zumindest eine Antriebsvorrichtung C weist eine elektrische Spule 71 auf. Die Spule 71 weist zumindest eine Leitungswindung und vorzugsweise eine Mehrzahl von Leitungswindungen auf, die eine Spulenachse AS der Spule 71 vollständig umgibt bzw. umgeben. Die Spulenachse AS kann als geometrisches Zentrum der Spule 71 definiert sein oder in Position und Richtung identisch mit der zentralen krümmungslosen Feldlinie sein.

Dabei kann insbesondere vorgesehen sein, dass die Spulenachse AS entlang der Festkörpergelenk-Drehachse D1 verläuft.

Zumindest eine Antriebsvorrichtung C kann auch eine Spulenvorrichtung 70 mit einem die Spulenachse AS teilweise oder ganz umlaufenden Spulengehäuse 72 aufweisen, in dem die Spule 71 strukturell integriert und insbesondere gelegen oder gehalten ist. Insbesondere kann das Spulengehäuse 72 als hohlringförmiges Spulengehäuse gestaltet sein, in dem die Spule 71 angeordnet ist, wobei die Umfangsrichtung der Spule 71 entlang der Umfangsrichtung des Spulengehäuses 72 verläuft. Auch kann das Spulengehäuse 72 als abschnittsweise hohlringförmiges Spulengehäuse gestaltet sein, so dass das Spulengehäuse nicht umlaufend geschlossen ist. Bei der Gestaltung des Spulengehäuses 72 als abschnittsweise hohlringförmiges Spulengehäuse verläuft die geometrische Achse des jeweiligen Hohlring-Abschnitts des Spulengehäuses 72 in oder entlang der Spulenachse AS der Spule 71.

Jede Antriebsvorrichtung C weist ein Kompensations-Bauteil 80 auf. Bei jeder der Ausführungsformen der erfindungsgemäßen Stellvorrichtung 1 kann die Spule 71 bzw. das Spulengehäuse 72 und das Kompensations-Bauteil 80 direkt oder indirekt, also über ein Strukturbauteil, miteinander bzw. aneinander fixiert sein und zusammen einen Aktor 60 ausbilden, da bei Bestromung der Spule 71 ein elektrisches Magnetfeld erzeugt wird.

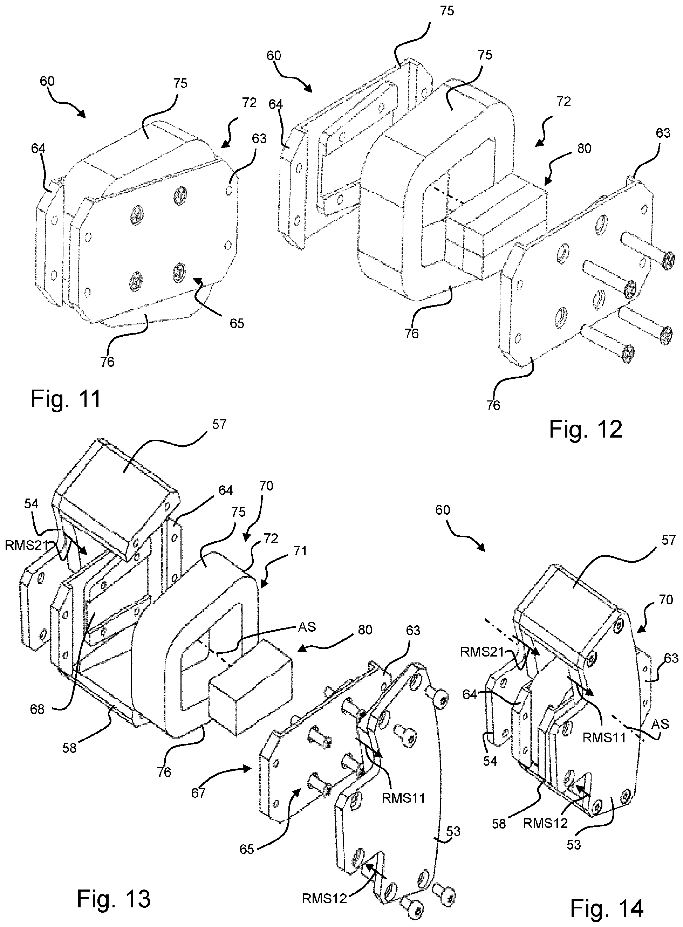

Das Kompensations-Bauteil 80 kann, wie es bei der Ausführungsform des Aktors 60 nach den Figuren 11 bis 14 realisiert ist, von seitlich der Spule angebrachten Befestigungsteilen 63, 64 an der Spule 71 oder dem Spulengehäuse 72 fixiert sein. Die Befestigungsteile 63, 64 liegen - quer zur Spulenachse AS gesehen - auf in Bezug auf die Spule 71 zueinander entgegen gesetzt gelegenen Seiten der Spule 71, wobei jeweils ein Befestigungsteil 63, 64 auf einer Seite der Spule 71 gelegen ist. Bei der Ausführungsform des Aktors 60 nach den Figuren 11 bis 14 sind die Befestigungsteile 63, 64 jeweils plattenförmig realisiert. Diese können auch als Halterung oder als Klammer oder Bügel oder Stange realisiert sein. Die Befestigungsteile 63, 64 sind bei der dargestellten Ausführungsform durch zumindest ein Verbindungselement 65 aneinander befestigt, wobei die Verbindungselemente 65 die Befestigungsteile 63, 64 an die Spule 71 oder das Spulengehäuse 72 von den beiden Seiten andrücken. Zwischen den

Befestigungsteilen 63, 64 ist das Kompensations-Bauteil 80 gelegen, das seitlich von einander zugewandten Oberflächen der Befestigungsteile 63, 64 und zwischen diesen gelegen ist. Dabei kann das Kompensations-Bauteil 80 von den Befestigungsteilen 63, 64 gehalten und optional dabei gepresst sein, wobei die Befestigungsteile 63, 64 auch an die Spule 71 oder das Spulengehäuse 72 von den beiden Seiten angedrückt werden. Die Verbindung zwischen den Befestigungsteilen 63, 64 und dem Kompensations-Bauteil 80 kann auch durch jeweils eine zumindest teilweise formschlüssige Aufnahme des Kompensations-Bauteils 80 mittels zumindest eines der Befestigungsteile 63, 64 realisiert sein, wobei dabei zumindest eines der Befestigungsteile 63, 64 eine Ausnehmung 67, 68 oder eine Stufe oder einen Steg aufweist, an der bzw. an dem das Kompensations-Bauteil 80 gehalten und fixiert sein kann.

Alternativ dazu kann der Aktor 60 auch derart realisiert sein, dass das Kompensations-Bauteil 80 an der Spule 71 oder dem Spulengehäuse 72 durch ein einzelnes Formstück gehalten und fixiert ist, das z.B. ein U-förmiges Formstück sein kann, das die Spule 71 oder das Spulengehäuse 72 umgreift und zwischen Schenkelabschnitten das Kompensations-Bauteil 80 aufnimmt. Weitere Alternativen umfassen den Verguss von Spule 71 und Kompensations-Bauteil 80 zu einer Einheit, etwa mit Epoxidharz-Vergussmasse, oder das Umspritzen von Spule 71 und Kompensations-Bauteil 80 mit einem Kunststoffmaterial.

Die Befestigung oder Fixierung des Kompensations-Bauteils 80 an dem zumindest einen Befestigungsteil 63, 64 kann auch durch eine andere Verbindungsvorrichtung als durch zumindest ein Verbindungselement 65 erfolgen, wie z.B. eine Clip-Verbindung. Auch kann das zumindest eine Befestigungsteil 63, 64 an der Spule 71 oder dem Spulengehäuse 72 angeklebt oder angelötet sein, wobei diese Realisierung mit oder ohne Verbindungselement 65 erfolgen kann.

Das Kompensations-Bauteil 80 ist vorzugsweise in der Spulenachse AS gesehen außerhalb eines Abschnitts der Spule angeordnet. Speziell kann bei jeder der Ausführungsformen der Stellvorrichtung die Anordnung des Kompensations-Bauteils nach einer der beiden Alternativen vorgesehen sein:
(K1) in der Spulenachse AS gesehen in dem von dem inneren Umfang der Spule 71 oder, bei einem zumindest abschnittsweise hohlring-förmigen Spulengehäuse 72, in dem von dem Spulengehäuse 72 umlaufenen Außenraum (Figuren 12 und 13 sowie 19 bis 24);
(K2) in der Spulenachse AS gesehen in dem außerhalb des äußeren Umfangs der Spule 71 oder Spulengehäuse 72 gelegenen Raums oder, bei einem zumindest abschnittsweise hohlring-förmigen Spulengehäuse 72, außerhalb des das Spulengehäuse 72 umlaufenden Außenraums.

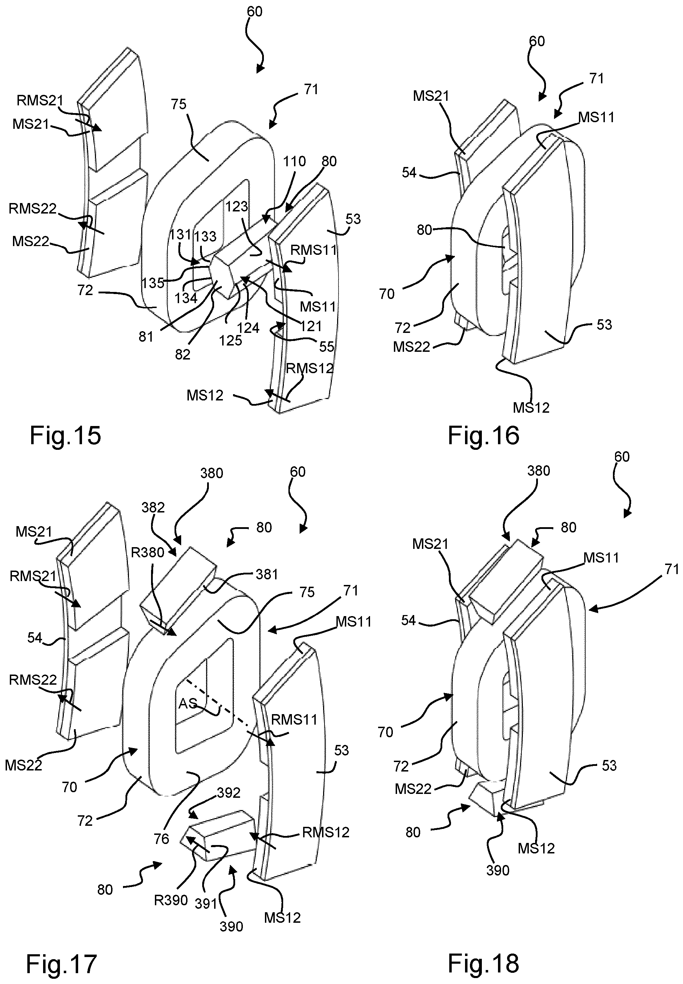

Eine Ausführungsform des Aktors 60 nach der Realisierungsalternative (K2) ist in der Figuren 17 und 18 dargestellt.

Das Kompensations-Bauteil 80 weist ein magnetisierbares oder ein magnetisiertes Material auf oder kann aus einem weich- oder hartmagnetischen Material hergestellt sein. Vorzugsweise ist das Kompensations-Bauteil 80 als ein homogener Materialblock und zugleich oder alternativ einstückig gebildet. Das Kompensations-Bauteil 80 kann bei jeder Ausführungsform der Stellvorrichtung 1 in zueinander unterschiedlichen Formen gestaltet sein. Insbesondere kann das Kompensations-Bauteil 80 im Wesentlichen quaderförmig oder zylinderförmig gestaltet sein. Dazu alternativ oder zusätzlich ist das Kompensations-

Bauteil 80 länglich mit unterschiedlichen Querschnittformen ausgeführt. In länglicher Gestalt kann das Kompensations-Bauteil 80 eine Querschnittsfläche mit kreisförmiger oder elliptischer oder quadratischer Form, mit der Form eines Rechtecks oder generell der Form eines Mehrecks aufweisen. Bei einer länglichen Gestalt kann das Kompensations-Bauteil 80 eine in Längsrichtung desselben verlaufende Mittellinie haben, die entlang oder in der Richtung des Abstands zwischen Stellkörper-Drehachse D1 und Spulenachse AS verläuft, wenn dieser Abstand durch das Zentrum Z verläuft.

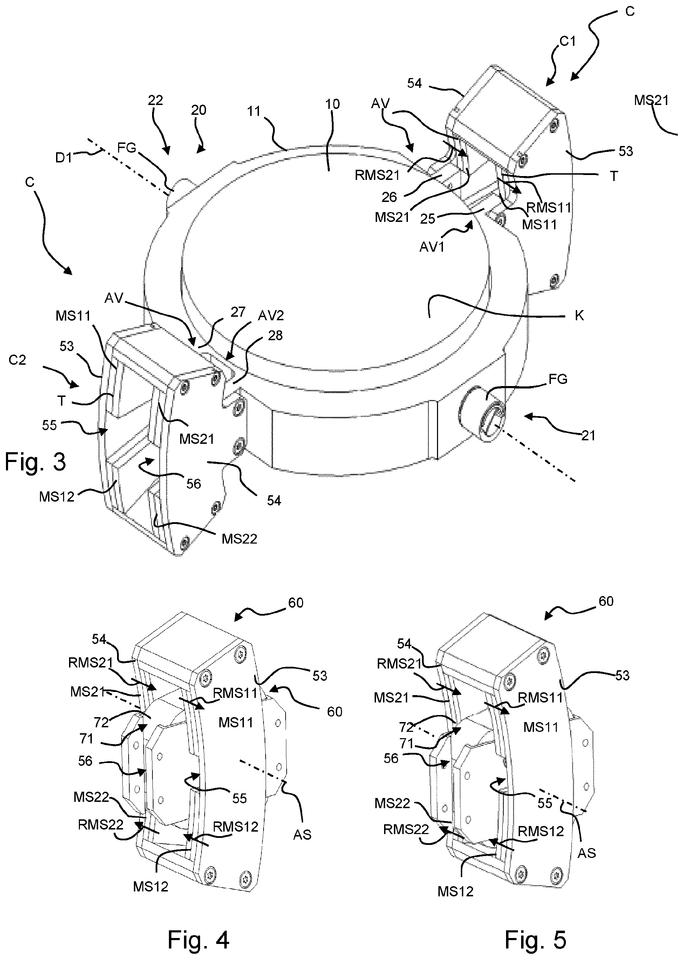

Die erfindungsgemäße Stellvorrichtung 1 weist zumindest ein relativ zur Spule 71 oder zum Spulengehäuse 72 bewegbar gelagertes Permanentmagnet-Segment MS aus einem hartmagnetischen Material auf. In den Figuren ist das Permanentmagnet-Segment MS als einstückiges oder einteiliges Bauteil dargestellt, wobei eine Trennlinie T eingetragen ist, die jedoch eine fiktive Trennlinie sein kann. Das Bezugszeichen "T" ist in der Figur 3 eingetragen. Die Trennlinie ist in anderen Figuren ohne Bezugszeichen dargestellt. Diese Trennlinie T zeigt symbolisch die Trennung zwischen zwei magnetischen Polen an, zu denen die jeweils mit einem Pfeil dargestellte Magnetfeldrichtung gehört. Die Lage des Permanentmagnet-Segments MS ist innerhalb seines Bewegungsbereich, der aufgrund der Kopplung der Antriebsvorrichtung C an den Stellkörper 10 und an das Basis-Bauteil B1 mechanisch vorgegeben ist, in Bezug auf die Spule 71 oder das Spulengehäuse 72 bevorzugt derart vorgesehen,
(m1) dass die Magnetfeldlinien im Inneren des Permanentmagnet-Segments MS entlang oder in der Richtung der Spulenachse AS verlaufen,
(m2) dass das Permanentmagnet-Segment MS in einem berührungslosen Abstand, der in der Spulenachse AS verläuft, neben der Spule 71 gelegen ist, wobei in einem Referenz-Zustand der Antriebsvorrichtung C ein Abschnitt der Spule 71 oder des Spulengehäuses 72 in der Spulenachse AS gesehen sich teilweise oder vollständig, also mit seinem Außenumfang, innerhalb des Permanentmagnet-Segments MS erstreckt.

Das Permanentmagnet-Segment MS kann bei jeder Ausführungsform der erfindungsgemäßen Stellvorrichtung 1 generell insbesondere plattenförmig oder quaderförmig geformt sein, jedoch auch jede andere räumliche Form aufweisen. In dem Fall, dass das Permanentmagnet-Segment MS plattenförmig ist, erstreckt sich das Permanentmagnet-Segment MS in einer Richtung, die in oder entlang der Relativbewegung zwischen Spule und Permanentmagnet-Segment bei Aktuierung einer jeweiligen Antriebsvorrichtung verläuft. Weiterhin hat das zumindest eine Permanentmagnet-Segment MS eine die Längserstreckung desselben definierende Oberfläche, deren Orientierung entlang oder in Richtung der Spulenachse AS gerichtet ist.

Die Lagerung der Antriebsvorrichtung C an der Stellvorrichtung 1 zur Ausführung der Stellbewegung kann nach einer der beiden Alternativen (a), (b) vorgesehen sein:
(a) der Aktor 60 ist an das Basis-Bauteil B1 gekoppelt und das Permanentmagnet-Segment (MS) ist an die Stellkörper-Anschlussvorrichtung AV gekoppelt (Moving Magnet-Prinzip),
(b) der Aktor 60 ist an die Stellkörper-Anschlussvorrichtung AV gekoppelt und das Permanentmagnet-Segment MS ist an das Basis-Bauteil B1 gekoppelt (Moving Coil-Prinzip).

Bei der in den Figuren 1 bis 3 gezeigten Ausführungsformen der Stellvorrichtung 1 ist die Alternative (a) realisiert. Dabei kann das zumindest eine Permanentmagnet-Segment MS auf einem Magnetsegment-Träger angeordnet sein. Ein solcher Magnetsegment-Träger kann insbesondere auf einer Oberfläche des zumindest einen Permanentmagnet-Segments MS gelegen sein, die der Spule 71 abgewandt orientiert ist. Bei der in den Figuren 1 bis 3 gezeigten Ausführungsformen der Stellvorrichtung 1 sind bei jeder Antriebsvorrichtung C zwei Magnetsegment-Träger 53, 54 angeordnet, die jeweils auf Seiten gelegen sind, die in Bezug auf die Spule 71 entgegen gesetzt zueinander gelegen sind. Generell kann vorgesehen sein, dass auf jeweils einem Magnetsegment-Träger ein Permanentmagnet-Segment MS oder mehr als ein Permanentmagnet-Segment MS, also zwei oder mehr als zwei Permanentmagnet-Segmente MS, angeordnet sind.

Optional können die Magnetsegment-Träger 53, 54 aneinander befestigt sein. Diese Befestigung kann mittels zumindest eines Verbindungsstücks realisiert sein. Ein Beispiel dieser Realisierung ist in der Ausführungsform des Aktors 60, die in den Figuren 11 bis 14 gezeigt ist, dargestellt. Bei dieser Ausführungsform des Aktors 60 weist der Aktor 60 zwei Verbindungsstücke 57, 58 auf, die jeweils zwei Endabschnitte der Magnetsegment-Träger 53, 54 miteinander verbinden. Die Endabschnitte jedes der Magnetsegment-Träger 53, 54 sind an in Richtungen der Relativbewegungen zwischen Spule 71 und des zumindest einen Permanentmagnet-Segments MS zueinander entgegen gesetzten Enden des jeweiligen Magnetsegment-Trägers 53, 54 gelegen. Das zumindest eine Verbindungsstück kann mittels zumindest eines Verbindungselements an dem jeweiligen Endabschnitt befestigt sein. Diese Befestigung kann auch durch auf ander Weise vorgesehen sein, z.B. durch Löten oder Kleben oder eine formschlüssige Befestigung.

Der Magnetsegment-Träger 53, 54 ist vorzugsweise aus einem weichmagnetischen Stahl gebildet, der das Feld der bevorzugt aufgeklebten Permanentmagnet-Segmente MS an der Klebeseite gut leitet. Alternativ kann der Magnetsegment-Träger aus einem nichtmagnetischen Material wie etwa Aluminium, Kunststoff etc. gebildet sein. Bei Verwendung eines nichtmagnetischen Materials sinkt jedoch die Effizienz des entsprechenden Aktors der Stellvorrichtung, da das Magnetfeld des Permanentmagnet-Segments bzw. der Permanentmagnet-Segmente nicht geführt wird, wodurch sich negativ beeinflussende Streufelder ausbilden.

Bei den voranstehend beschriebenen Ausführungsformen kann insbesondere vorgesehen sein, dass die Spulenachse AS entlang der Festkörpergelenk-Drehachse D1 verläuft. Alternativ dazu kann vorgesehen sein, dass die Relativbewegungs-Richtung der Relativbewegung zwischen Spule 70 und zumindest einem Permanentmagnet-Segment einer Antriebsvorrichtung C quer zu einer Ebene verläuft, die von der Festkörpergelenk-Drehachse des Stellkörpers und der Stellkörper-Anschlussvorrichtung, an der der jeweilige Aktor gekoppelt ist, aufgespannt ist. In diesem Fall kann auch vorgesehen sein, dass die Spulenachse quer zu der Festkörpergelenk-Drehachse D1 verläuft.

Die Funktionsweise der erfindungsgemäßen Stellvorrichtung 1 mit dem Aktor 60 ist wie folgt: Der Aktor 60 wird dadurch aktuiert, dass die Spule 71 elektrisch angesteuert wird, so dass durch diese Strom fließt. Infolgedessen erzeugt die Spule 71 in ihrem Inneren ein Magnetfeld, dessen Magnetfeldlinien im Inneren der Spule 71 oder des Spulengehäuses 72 in oder entlang der Spulenachse AS verlaufen. Dieses Spulen-Magnetfeld erzeugt im Zusammenwirken bzw. im Wechselwirken mit dem von einem Permanentmagnet-Segment MS erzeugten Magnetfeld eine Kraft zwischen dem einen Permanentmagnet-Segment MS und der Spule 71, welche als Auslenkungskraft für die gewünschte Stellbewegung bzw. Verkippung des Stellkörpers sorgt. Aufgrund der entsprechenden Verschiebung zwischen dem Permanentmagnet-Segment MS und der Spule 71 resultiert eine Anziehungskraft zwischen dem einen Permanentmagnet-Segment MS und dem Kompensations-Bauteil 80. Die Stellbewegung kann dabei bewirken, dass sich das Permanentmagnet-Segment MS und die Spule 71 relativ zueinander derart in eine Richtung bewegen, bei der, in der Spulenachse AS gesehen, das betreffende Permanentmagnet-Segment MS auf Höhe oder in den Bereich des Kompensations-Bauteils 80 kommt.

Dies bewirkt, dass die dabei entstehende Anziehungskraft einer Rückstellbewegungsneigung des Stellkörpers, hervorgerufen durch die ausgelenkten bzw. elastisch verformten Festkörpergelenke, entgegen wirkt.

Die bei Stromfluss in der Spule zwischen Kompensations-Bauteil 80 und Permanentmagnet-Segment MS generierte Kraft (Anziehungskraft) wirkt in einer Richtung, welche zu der Richtung der aufgrund der Auslenkungskraft erzeugten Bewegung des Permanentmagnet-Segments MS relativ zu der Spule 71 entgegengesetzt ist. Auf diese Weise wirkt diese Anziehungskraft der Rückstellkraft, die das zumindest eine Festkörpergelenk auf den Stellkörper 10 bei Auftreten der Stellbewegung desselben ausübt, entgegen. Dabei ist die Stellvorrichtung 1 derart ausgelegt, dass die Antriebsvorrichtung bzw. deren Komponenten Kompensations-Bauelement und das Permanentmagnet-Segment MS die Rückstellkraft, die das zumindest eine Festkörpergelenk auf den Stellkörper 10 ausgeübt, zumindest teilweise, also teilweise oder vollständig, kompensiert.

In diesem Zusammenhang sind die genannten zwei Positionen des Kompensations-Bauteils relativ zum Permanentmagnet-Segment insbesondere definiert durch: eine erste Relativposition, die eine Ausgangs-Relativposition ist, die insbesondere bei dem Referenz-Zustand des Aktors 60 realisiert ist, und bei der keine oder nur sehr geringe bzw. vernachlässigbare Anziehungskräfte zwischen dem Kompensations-Bauteil und dem Permanentmagnet-Segment herrschen, und eine zweite Relativposition, die eine Stell-Relativposition ist, bei der das Kompensations-Bauteil 80 in einem Bereich gelegen ist, in dem eine größere Wechselwirkung zwischen dem Kompensations-Bauteil und dem Permanentmagnet-Segment vorherrscht, so dass eine stärkere Anziehungskraft zwischen dem Permanentmagnet-Segment und dem Kompensations-Bauteil vorliegt als in der ersten Relativposition.

Unter Referenz-Zustand des Aktors 60 oder der Stellvorrichtung 1 wird hierin insbesondere der Zustand verstanden, den der Aktor 60 einnimmt, wenn die Spule 71 nicht elektrisch angesteuert ist und von dem aus sich das Permanentmagnet-Segment MS und die Spule 71 relativ zueinander bewegen, wenn die Spule 71 elektrisch angesteuert oder aktiviert ist.

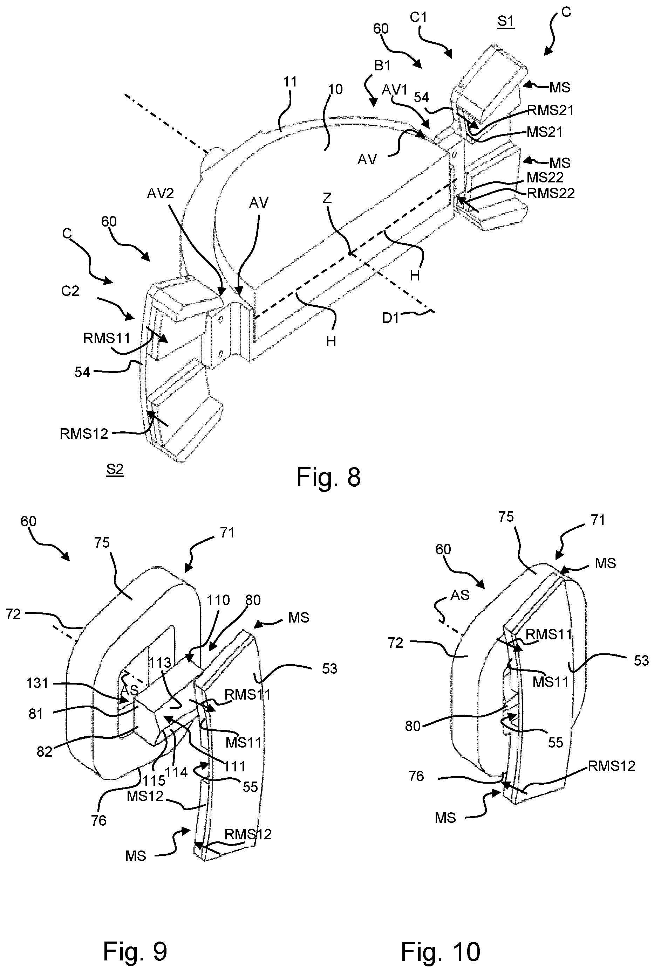

Bei jeder der Ausführungsformen der erfindungsgemäßen Stellvorrichtung 1 kann die zumindest eine Antriebsvorrichtung C jeweils zumindest ein Permanentmagnet-Segment MS und insbesondere ein oder zwei oder vier Permanentmagnet-Segmente MS, aber auch eine andere Anzahl von Permanentmagnet-Segmenten MS aufweisen. Beispielsweise kann eine Antriebsvorrichtung C der erfindungsgemäßen Stellvorrichtung 1 zwei Permanentmagnet-Segmente MS aufweisen, die z.B. auf einem Magnetsegment-Träger 53 befestigt sind, wobei die Permanentmagnet-Segmente MS von dem Zentrum Z oder der Spulenachse AS aus gesehen auf derselben Seite des Aktors 60 gelegen sind. Der Magnetsegment-Träger 53 kann plattenförmig gebildet sein. Die Größe des Magnetsegment-Trägers 53 ist vorzugsweise derart vorgesehen, dass die zwei Permanentmagnet-Segmente MS vollständig auf einer Außenfläche des Magnetsegment-Trägers 53 gelegen sind. Dabei können die zwei Permanentmagnet-Segmente MS auf derjenigen Außenfläche des Magnetsegment-Trägers 53 gelegen sein, die der Spule 71 zugewandt gelegen ist. Somit sind die an dem Magnetsegment-Träger 53 befestigten zwei Permanentmagnet-Segmente MS in einer Blickrichtung gesehen, die entlang der Richtung des Abstands zwischen Stellkörper-Drehachse D1 und Spulenachse AS verläuft, auf einer Seite der Spule 71 oder des Spulengehäuses 72 angeordnet. Eine derartige Gestaltung des Aktors 60 ist in der Figur 8 sowie den Figuren 9 und 10 dargestellt. Die Realisierung des Aktors 60 bei der Figur 8 unterscheidet sich, in einer Blickrichtung quer zu der Ebene, die von der Stellkörper-Drehachse D1 und dem Hebel aufgespannt ist, hinsichtlich der Seite, auf der die zwei Permanentmagnet-Segmente MS angeordnet sind, von der Seite des Aktors 60, auf der bei den Figuren 9 und 10 die zwei Permanentmagnet-Segmente MS angeordnet sind: Bei der Darstellung der Figur 8 weist dementsprechend der auf einer ersten Seite S1 gelegene Aktor 60 einen Magnetsegment-Träger 53 mit den Permanentmagnet-Segmenten MS11, MS12 und der auf einer zweiten Seite S2 gelegene Aktor 60 einen Magnetsegment-Träger 54 mit den Permanentmagnet-Segmenten MS21, MS22 auf. In den Figuren 9 und 10 ist jeweils der Magnetsegment-Träger 54 mit den Permanentmagnet-Segmenten MS21, MS22 dargestellt.

Den zwei auf dem Magnetsegment-Träger 53 angeordneten Permanentmagnet-Segmenten sind die Bezugszeichen MS11, MS12 zugeordnet. Die auf einem Magnetsegment-Träger 53 angeordneten Permanentmagnet-Segmente MS11, MS12 sind von dem Zentrum Z oder der Spulenachse AS aus gesehen sowie in Richtung der Spulenachse AS gesehen nebeneinander angeordnet und in den Richtungen der Relativbewegungen zwischen Spule 71 und des zumindest einen Permanentmagnet-Segments MS hintereinander angeordnet. Auch sind die einzelnen Permanentmagnet-Segmente MS11, MS12 in der Richtung der Relativbewegung zwischen Spule 71 oder Permanentmagnet-Segmente MS11, MS12 hintereinander angeordnet. Vorzugsweise sind die zwei auf einem Magnetsegment-Träger 53 angeordneten Permanentmagnet-Segmente MS11, MS12 durch einen durchgehenden Spalt 55 getrennt, der jeweils sich entlang der Richtung des Abstands zwischen Stellkörper-Drehachse D1 und Spulenachse AS verläuft, wenn dieser Abstand durch das Zentrum Z verläuft.

Bei dieser Ausführungsform sind die Permanentmagnet-Segmente MS11, MS12 von der Stellkörper-Drehachse D1 aus gesehen in unterschiedlichen Richtungen, die in oder entlang der Spulenachse AS gerichtet sind, polarisiert. Dies in der Figur 9 beispielartig dargestellt: Bei dem Permanentmagnet-Segment MS11 sind die Magnetfeldlinien oder ist die Nord-Süd-Richtung von der Spule weg gerichtet, so dass der Nordpol an der der Spule 71 zugewandten Seite des Permanentmagnet-Segments MS11 gelegen ist. Diese Magnetfeldlinien-Richtung ist in der Figur 9 mit einem Pfeil und dem Bezugszeichen RMS11 angegeben. Dagegen sind bei dem Permanentmagnet-Segment MS12 die Magnetfeldlinien oder die Nord-Süd-Richtung zu der Spule hin gerichtet, so dass der Südpol an der der Spule 71 zugewandten Seite des Permanentmagnet-Segments MS12 gelegen ist. Diese Magnetfeldlinien-Richtung ist in der Figur 9 mit einem Pfeil und dem Bezugszeichen RMS12 angegeben.

Das Kompensations-Bauteil 80 kann aus einem weichmagnetischen Material gebildet oder hergestellt sein oder bestehen. Alternativ dazu kann das Kompensations-Bauteil 80 aus einem hartmagnetischen Material gebildet sein und zwei Polarisierungsbereiche 81, 82 aufweisen. Dabei ist bei einem Referenz-Zustand oder der Nulllage der Antriebsvorrichtung die Mittellinie des Kompensations-Bauteils 80, die entlang der Richtung des Abstands zwischen Stellkörper-Drehachse D1 und Spulenachse AS verläuft, zwischen dem ersten Permanentmagnet-Segment MS11 und dem zweiten Permanentmagnet-Segment MS12 gelegen. Bei Ausführungsformen, bei denen die Permanentmagnet-Segmente MS11, MS12 durch einen durchgehenden Spalt 55 getrennt sind, ist in dem Referenz-Zustand oder in der Nulllage diese Mittellinie in den Richtungen der Relativbewegungen zwischen Spule 71 und der Permanentmagnet-Segmente MS11, MS12 auf der Höhe des Spalts 55 gelegen. In dieser Nulllage ist ein erster Polarisierungsbereich 81 in einer Weise polarisiert, dass dessen Magnetfeldlinien-Richtung R81 entlang der Magnetfeldlinien-Richtung RMS11 des ersten Permanentmagnet-Segments MS11 verläuft und dass dessen Magnetfeldlinien-Richtung R82 entlang der Magnetfeldlinien-Richtung RMS12 des zweiten Permanentmagnet-Segments MS12 verläuft.

Insbesondere bei den Ausführungsformen der Stellvorrichtung 1 mit einer Antriebsvorrichtung C, bei der Permanentmagnet-Segmente MS11, MS12 - von der Stellkörper-Drehachse D1 aus gesehen - auf nur einer Seite der Spule 71 gelegen sind, kann die Formgebung des Kompensations-Bauteils 80 gemäß dem in der Figur 9 gezeigten Kompensations-Bauteil vorgesehen sein, das mit dem Bezugszeichen 110 versehen ist. Das Kompensations-Bauteil 110 weist eine Oberfläche oder Seitenfläche 111 auf, die der Anordnung der Permanentmagnet-Segmente MS11, MS12 zugewandt gelegen ist. Weiterhin weist das Kompensations-Bauteils 80 eine weitere Oberfläche oder Seitenfläche 131 auf, die entgegen gesetzt zu der Seitenfläche 111 gelegen ist. Die Oberfläche 111 kann aus zwei Teilflächen 113, 114 gebildet sein, die von der Stellkörper-Drehachse D1 aus gesehen winklig aufeinander zu verlaufen. Dadurch treffen die Teilflächen 113, 114 in einer Linie 115 aufeinander, die entlang des Spalts 55 verläuft. Die Teilflächen 113, 114 oder Schnitt-Konturlinien derselben, die sich von der Stellkörper-Drehachse D1 aus ergeben, erstrecken sich entlang der Spulenachse AS gesehen in einem Mittelabschnitt, oder ihren Endabschnitten, die in der Linie 115 aufeinander treffen, in einem Winkel zwischen 10 Grad und 95 Grad. Die Linie 115 kann auch eine Kantenlinie sein. Alternativ dazu kann das Aufeinandertreffen der Endabschnitte in der Linie 115 in einem Abschnitt erfolgen, dessen Konturlinien derselben, die sich von der Stellkörper-Drehachse D1 aus ergeben, zur Anordnung der Permanentmagnet-Segmente MS11, MS12 hin sphärisch gekrümmt sind.

Bei diesen Ausführungsformen kann diejenige Seitenfläche 111, die der Anordnung der Permanentmagnet-Segmente MS11, MS12 zugewandt gelegen ist, zwei insbesondere geradflächige oder sphärische Teilfächenabschnitte 113, 114 aufweisen, deren Orientierungen in einem Winkel zwischen 10 Grad und 40 Grad zu der Spulenachse AS verlaufen, wobei sich die Winkel in der Null-Lage oder im Referenz-Zustand vom Zentrum Z aus gesehen in eine Richtung öffnen, in der das jeweils näher gelegene Permanentmagnet-Segment MS11, MS12 der Anordnung von Permanentmagnet-Segmenten gelegen ist.

Ein derartiges Kompensations-Bauteil 110 kann insbesondere vorgesehen sein, wenn zwischen den Permanentmagnet-Segmenten MS11, MS12 ein durchgehender Spalt 55 vorgesehen ist oder nicht.

Generell kann bei einer Antriebsvorrichtung C, die zumindest eine Anordnung von zwei Permanentmagnet-Segmenten MS11, MS12 aufweist, die vom Zentrum Z aus gesehen auf zumindest einer Seite der Spule 71 gelegen sind, ein Kompensations-Bauteils 80 aufweisen, das aufweist: eine Seitenfläche 111, die der Anordnung der Permanentmagnet-Segmente MS11, MS12 zugewandt gelegen ist, wobei die Seitenfläche 111 zwei geradflächige, d.h. ungekrümmte Teilfächenabschnitte 113, 114 aufweist, deren Orientierungen in einem Winkel zwischen 10 Grad und 40 Grad zu der Spulenachse AS verlaufen. Dabei öffnen sich die Winkel in der Null-Lage oder im Referenz-Zustand vom Zentrum aus gesehen in eine Richtung, in der das jeweils näher gelegene Permanentmagnet-Segment MS11, MS12 der Anordnung von Permanentmagnet-Segmenten MS11, MS12 gelegen ist.

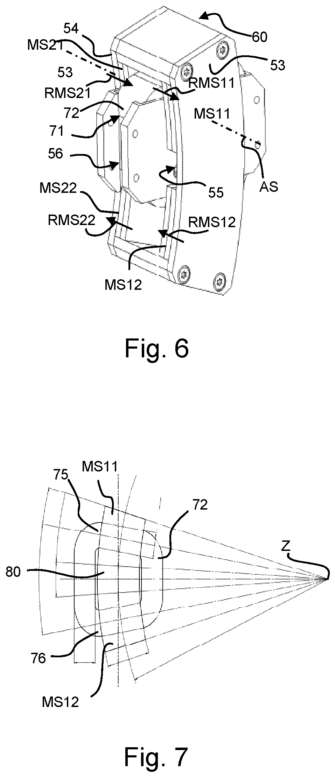

Die Figur 7 zeigt schematisch die Nulllage oder den Referenz-Zustand des dargestellten Aktors 60. Wie in der Figur 7 dargestellt, kann der erfindungsgemäß vorgesehene Aktor 60 derart gestaltet und angeordnet sein, dass im Referenz-Zustand - in der Spulenachse AS gesehen - ein erstes Permanentmagnet-Segment MS11 des Paares von Permanentmagnet-Segmenten einen ersten Spulenabschnitt 75 der Spule 71 abschnittsweise überlappt und ein zweites Permanentmagnet-Segment MS12 des Paares von Permanentmagnet-Segmenten einen zweiten Spulenabschnitt 76 der Spule 71 abschnittsweise überlappt. Dabei sind der erste Spulenabschnitt 75 der Spule 71 und der zweite Spulenabschnitt 76 der Spule 71 in Bezug auf die Spulenachse AS, z.B. von der Stellkörper-Drehachse D1 aus gesehen, einander gegenüber liegend angeordnet, d.h. in den Richtungen der Relativbewegungen zwischen Spule 71 und des zumindest einen Permanentmagnet-Segments MS hintereinander angeordnet.

Bei einer Ausführungsform der erfindungsgemäßen Stellvorrichtung 1 mit insgesamt nur einem Permanentmagnet-Segment MS, das von der Stellkörper-Drehachse D1 aus gesehen auf einer Seite der Spule 71 angeordnet ist, kann dieses derart gestaltet und angeordnet sein, dass im Referenz-Zustand - in der Spulenachse AS gesehen - das Permanentmagnet-Segment MS den Spulenabschnitt 75 oder 76 der Spule 71 zumindest abschnittsweise überlappt. In analoger Weise kann bei einer Ausführungsform der erfindungsgemäßen Stellvorrichtung 1 mit zwei Permanentmagnet-Segmenten MS, die - in einer Blickrichtung quer zu der Ebene, die von der Stellkörper-Drehachse D1 und dem durch den Abstand gebildeten Hebel aufgespannt ist, oder von der Stellkörper-Drehachse D1 aus gesehen - auf jeweils einer Seite der Spule 71 angeordnet sind, das jeweilige Permanentmagnet-Segment MS im Referenz-Zustand des Aktors 60, in der Spulenachse AS gesehen, zumindest abschnittsweise den Spulenabschnitt 75 oder den Spulenabschnitt 76 der Spule 71 überlappen.

Bei jeder Ausführungsform der erfindungsgemäßen Stellvorrichtung 1 kann der Bewegungsbereich derselben derart definiert sein, dass in diesem, in Richtung der Spulenachse AS gesehen, zumindest eine Überlappung oder Überdeckung eines Permanentmagnet-Segments MS durch einen der Spulenabschnitte 75, 76 gegeben ist, die von der Spulenachse AS aus in Richtung einer Relativbewegung zwischen Spule 71 und des zumindest einen Permanentmagnet-Segments MS gegeben ist.

Weiterhin kann bei jeder der Ausführungsformen der erfindungsgemäßen Stellvorrichtung 1 vorgesehen sein, dass zumindest eine Antriebsvorrichtung C zwei Paare von Permanentmagnet-Segmenten MS11, MS12, MS21, MS22 aufweist, von denen jeweils ein Paar von Permanentmagnet-Segmenten MS11, MS12, MS21, MS22 auf einem Magnetsegment-Träger 53, 54 befestigt sind. D.h. ein erstes Paar von Permanentmagnet-Segmenten MS11, MS12 ist auf einem ersten Magnetsegment-Träger 53 und ein zweites Paar von Permanentmagnet-Segmenten MS21, MS22 ist auf einem zweiten Magnetsegment-Träger 54 angeordnet. Dabei ist jedes Paar von Permanentmagnet-Segmenten MS11, MS12 oder MS21, MS22 von dem Zentrum Z oder der Spulenachse AS aus gesehen auf zueinander unterschiedlichen Seiten der Spule 71 oder des Aktors 60 gelegen. Dabei sind jeweils zwei Permanentmagnet-Segmente MS11, MS21 sowie die zwei Permanentmagnet-Segmente MS12, MS22 von der Stellkörper-Drehachse D1 aus gesehen in Richtung der Spulenachse AS nebeneinander angeordnet.

Vorzugsweise sind die zwei auf einem Magnetsegment-Träger 53, 54 angeordneten Permanentmagnet-Segmente MS11, MS12 bzw. MS21, MS22 durch einen durchgehenden Spalt 55 bzw. 56 getrennt, der jeweils entlang der Richtung des Abstands zwischen Stellkörper-Drehachse D1 und Spulenachse AS verläuft, wenn dieser Abstand durch das Zentrum Z verläuft. Die Spalte 55, 56 sind in den Richtungen der Relativbewegungen zwischen Spule 71 und der Permanentmagnet-Segmente einander gegenüber liegend oder auf derselben Höhe gelegen.

Ausführungsformen der Antriebsvorrichtung mit diesen Merkmalen sind in den Figuren 3 bis 6 sowie der Figur 13 dargestellt. Auf einem ersten Magnetsegment-Träger 53 sind die Permanentmagnet-Segmente MS11, MS12 und auf einem zweiten Magnetsegment-Träger 54 sind die Permanentmagnet-Segmente MS21, MS22 angeordnet. Bei den Ausführungsformen der Antriebsvorrichtung, die in den Figuren 3 bis 6 oder der Figur 13 gezeigt sind, kann nach einer erfindungsgemäßen Abwandlung der Antriebsvorrichtung vorgesehen sein, dass das Paar von Permanentmagnet-Segmenten MS11, MS12 oder das Paar von Permanentmagnet-Segmenten MS21, MS22 nicht vorhanden ist.

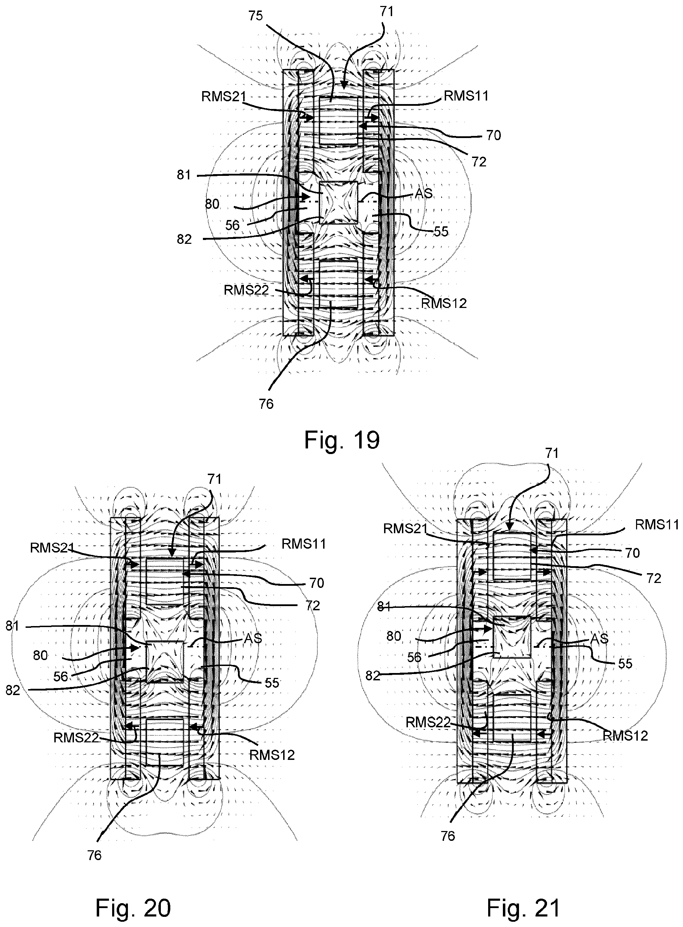

Bei Ausführungsformen der Antriebsvorrichtung mit zwei Paaren von Permanentmagnet-Segmenten MS11, MS12 bzw. MS21, MS22 sind die von der Stellkörper-Drehachse D1 aus gesehen in Richtung der Spulenachse AS jeweils hintereinander angeordneten Permanentmagnet-Segmente MS11, MS21 sowie MS21, MS22 vorzugsweise in derselben Richtung und die vertikal zur Spulenachse AS jeweils nebeneinander angeordneten Permanentmagnet-Segmente MS11, MS12 sowie MS21, MS22 vorzugsweise in unterschiedlichen Richtungen polarisiert. Dies ist in den Figuren 4 bis 6 sowie in den Figuren 19 bis 21 und den Figuren 23 bis 25 beispielartig dargestellt: Bei den Permanentmagnet-Segmenten MS11, MS21 sind die Magnetfeldlinien oder ist die Nord-Süd-Richtung von der Spule weg gerichtet, so dass die Nordpole an der der Spule 71 zugewandten Seite der Permanentmagnet-Segmenten MS11, MS21 gelegen ist. Dagegen sind bei den Permanentmagnet-Segmenten MS12, MS22 die Magnetfeldlinien oder die Nord-Süd-Richtung zu der Spule hin gerichtet, so dass die Südpole an der der Spule 71 zugewandten Seite der Permanentmagnet-Segmente MS12, MS22 gelegen sind.

Die Figur 7 und die Figuren 19 und 23 zeigen schematisch die Nulllage oder den Referenz-Zustand des dargestellten Aktors 60. Aus diesen Darstellungen ist ersichtlich, dass bei dieser Ausführungsform des erfindungsgemäß vorgesehenen Aktors 60 das Kompensations-Bauteil derart gestaltet und angeordnet ist, dass im Referenz-Zustand oder der Nulllage in Richtung der Spulenachse AS jeweils hintereinander gelegene erste Permanentmagnet-Segmente MS11, MS21 verschiedener Paare von Permanentmagnet-Segmenten einen ersten Spulenabschnitt 75 abschnittsweise überlappen und in Richtung der Spulenachse AS jeweils hintereinander gelegene zweite Permanentmagnet-Segmente MS12, MS22 verschiedener Paare von Permanentmagnet-Segmenten einen zweiten Spulenabschnitt 76 abschnittsweise überlappen. Dabei sind der erste Spulenabschnitt 75 und der zweite Spulenabschnitt 76 in Bezug auf die Spulenachse AS einander gegenüber liegend angeordnet, d.h. in den Richtungen der Relativbewegungen zwischen Spule 71 und des zumindest einen Permanentmagnet-Segments MS hintereinander angeordnet. Insbesondere ist erfindungsgemäß vorgesehen, dass der erste Spulenabschnitt 75 und der zweite Spulenabschnitt 76 zumindest abschnittsweise entlang der Richtung des Abstands zwischen Stellkörper-Drehachse D1 und Spulenachse AS verlaufen, insbesondere wenn dieser Abstand durch das Zentrum Z verläuft.

Bei den Ausführungsformen der Stellvorrichtung 1 mit zumindest einer Antriebsvorrichtung C mit jeweils einem Paar von Permanentmagnet-Segmenten MS11, MS12 oder MS21, MS22 auf beiden Seiten der Spule 71 kann das Kompensations-Bauteil 80 aus einem weichmagnetischen Material gebildet oder hergestellt sein oder bestehen.

Bei diesen Ausführungsformen des Aktors 60 kann alternativ dazu das Kompensations-Bauteil 80 aus einem hartmagnetischen Material gebildet sein oder bestehen, und analog zu der Antriebsvorrichtung C, bei der Permanentmagnet-Segmente MS11, MS12 nur auf einer Seite der Spule 71 gelegen sind, in unterschiedlichen Richtungen polarisiert sein (Figur 15). Dabei ist das Kompensations-Bauteil 80 aus zwei Polarisierungsbereichen 81, 82 gebildet, wobei bei einem Referenz-Zustand oder der Nulllage der Antriebsvorrichtung die Mittellinie des Kompensations-Bauteil 80, die entlang der Richtung des Abstands zwischen Stellkörper-Drehachse D1 und Spulenachse AS verläuft, zwischen dem ersten Permanentmagnet-Segment MS11 und dem zweiten Permanentmagnet-Segment MS12 gelegen ist. Bei Ausführungsformen, bei denen die Permanentmagnet-Segmente MS11, MS12 durch einen durchgehenden Spalt 55 und die Permanentmagnet-Segmente MS21, MS22 durch einen durchgehenden Spalt 56 getrennt sind, ist in dem Referenz-Zustand oder in der Nulllage diese Mittellinie in den Richtungen der Relativbewegungen zwischen Spule 71 und der Permanentmagnet-Segmente MS11, MS12 auf der Höhe der Spalte 55, 56 gelegen. Insbesondere in dieser Nulllage ist ein erster Polarisierungsbereich 81 in einer Weise polarisiert, dass dessen Magnetfeldlinien-Richtung R81 entlang der Magnetfeldlinien-Richtung RMS11 des ersten Permanentmagnet-Segments MS11 und entlang der Magnetfeldlinien-Richtung RMS21 des ersten Permanentmagnet-Segments MS11 verläuft. Dabei ist weiterhin ein zweiter Polarisierungsbereich 82 in einer Weise polarisiert, dass dessen Magnetfeldlinien-Richtung R82 entlang der Magnetfeldlinien-Richtung RMS12 des zweiten Permanentmagnet-Segments MS12 und entlang der Magnetfeldlinien-Richtung RMS22 des zweiten Permanentmagnet-Segments MS22 verläuft.

Bei den Ausführungsformen der Stellvorrichtung 1 mit einer Antriebsvorrichtung C, bei der auf jeder Seite der Spule 71 jeweils ein Paar von Permanentmagnet-Segmenten MS11, MS12 bzw. MS21, MS22 gelegen ist und das Kompensations-Bauteil 80 ein weichmagnetisches oder hartmagnetisches Material aufweist oder aus diesem besteht, kann die Formgebung des Kompensations-Bauteils 80 gemäß dem in der Figur 15 gezeigten Kompensations-Bauteil vorgesehen sein, das mit dem Bezugszeichen 110 versehen ist. Das Kompensations-Bauteil 110 weist eine erste Oberfläche 121 auf, die der Anordnung der Permanentmagnet-Segmente MS11, MS12 zugewandt gelegen ist und eine zweite Oberfläche 131, die der Anordnung der Permanentmagnet-Segmente MS21, MS22 zugewandt gelegen ist. Die Oberflächen 121, 131 sind jeweils aus zwei Teilflächen 123, 124 bzw. 133, 134 gebildet, die jeweils von der Stellkörper-Drehachse D1 aus gesehen winklig aufeinander zu verlaufen. Dadurch treffen die Teilflächen 123, 124 in einer Linie 125, die entlang des Spalts 55 verläuft, und die Teilflächen 133, 134 in einer Linie 135, die entlang des Spalts 56 verläuft, aufeinander. Die Teilflächen 123, 124 oder Schnitt-Konturlinien derselben sowie die Teilflächen 133, 134 oder Schnitt-Konturlinien derselben, die sich von der Stellkörper-Drehachse D1 aus ergeben, erstrecken sich entlang der Spulenachse AS gesehen in einem Mittelabschnitt, oder ihren Endabschnitten, die in der Linie 125 bzw. 135 aufeinander treffen, in einem Winkel zwischen 10 Grad und 95 Grad. Die Linien 125, 135 können auch jeweils eine Kantenlinie sein. Alternativ dazu kann das Aufeinandertreffen der Endabschnitte in der Linie 125 bzw. 135 in einem Abschnitt erfolgen, dessen Konturlinien derselben, die sich von der Stellkörper-Drehachse D1 aus ergeben, zur Anordnung der Permanentmagnet-Segmente MS11, MS12 bzw. zur Anordnung der Permanentmagnet-Segmente MS21, MS22 hin sphärisch gekrümmt sind. Ein derartiges Kompensations-Bauteil 110 kann vorgesehen sein, wenn zwischen den Permanentmagnet-Segmente MS11, MS12 und den Permanentmagnet-Segmenten MS21, MS22 ein durchgehender Spalt 55 vorhanden ist oder nicht.

Generell kann bei diesen Ausführungsformen diejenige Seitenfläche 121, die der Anordnung der Permanentmagnet-Segmente MS11, MS12 zugewandt gelegen ist, zwei Seitenflächen 123, 124 aufweisen, deren Orientierungen jeweils mit einem Winkel zwischen 10 Grad und 40 Grad zu der Spulenachse AS ausgerichtet sind, wobei sich die Winkel in der Null-Lage oder im Referenz-Zustand vom Zentrum Z aus gesehen in eine Richtung öffnen, in der das jeweils näher gelegene Permanentmagnet-Segment MS11, MS12 der Anordnung von Permanentmagnet-Segmenten MS11, MS12 gelegen ist. Generell kann zusätzlich bei diesen Ausführungsformen diejenige Seitenfläche 131, die der Anordnung der Permanentmagnet-Segmente MS21, MS22 zugewandt gelegen ist, zwei Seitenflächen 133, 134 aufweisen, deren Orientierungen jeweils mit einem Winkel zwischen 10 Grad und 40 Grad zu der Spulenachse AS ausgerichtet sind, wobei sich die Winkel in der Null-Lage oder im Referenz-Zustand vom Zentrum Z aus gesehen in eine Richtung öffnen, in der das jeweils näher gelegene Permanentmagnet-Segment MS21, MS22 der Anordnung von Permanentmagnet-Segmenten MS21, MS22 gelegen ist.

Das Kompensations-Bauteil 80 kann nach der hierin definierten Realisierungsalternative (K2), in der Spulenachse AS gesehen, in dem Raum, der außerhalb des von dem äußeren Umfangs der Spule 71 oder des Spulengehäuses 72 gelegen ist, gelegen sein.

In den Figuren 17 und 18 ist eine Ausführungsform des Aktors 60 gezeigt, bei der das Kompensations-Bauteil 80 aus einem ersten Kompensations-Element 380 und einem zweiten Kompensations-Element 390 gebildet ist. Beide Kompensations-Elemente 380, 390 sind in dem außerhalb des von dem äußeren Umfang der Spule 71 oder Spulengehäuse 72 gelegenen Raums gelegen. Ein erstes Kompensations-Element 380 ist an dem ersten Spulenabschnitt 75 der Spule 71 und ein zweites Kompensations-Element 390 ist an dem zweiten Spulenabschnitt 76 der Spule 71 gelegen. Beide Kompensations-Elemente 380, 390 und die Spule 71 sind - in den Richtungen der Relativbewegungen zwischen Spule 71 und des zumindest einen Permanentmagnet-Segments MS gesehen - übereinander gelegen.

Das erste Kompensations-Element 380 weist eine erste Seitenfläche 381 auf, die der Anordnung der Permanentmagnet-Segmente MS11, MS12 zugewandt gelegen ist, und eine zweite Seitenfläche 382 auf, die entgegen gesetzt zu der ersten Seitenfläche 381 gelegen ist und die der Anordnung der Permanentmagnet-Segmente MS21, MS22 zugewandt gelegen ist. Dabei hat diejenige Seitenfläche 381, die der Anordnung der Permanentmagnet-Segmente MS11, MS12 zugewandt gelegen ist, eine Orientierung, die in einem Winkel zwischen 10 Grad und 40 Grad zu der Spulenachse AS verläuft. Alternativ oder zusätzlich kann generell die Seitenfläche 381 einen insbesondere geradflächigen oder sphärischen Teilfächenabschnitt aufweisen, dessen Orientierung in einem Winkel zwischen 10 Grad und 40 Grad zu der Spulenachse AS verläuft, wobei sich der Winkel in der Null-Lage oder im Referenz-Zustand vom Zentrum Z aus gesehen in eine Richtung öffnet, in der das näher gelegene Permanentmagnet-Segment MS11 der Anordnung von Permanentmagnet-Segmenten MS11, MS12 gelegen ist. Weiterhin hat dabei diejenige Seitenfläche 382, die der Anordnung der Permanentmagnet-Segmente MS21, MS22 zugewandt gelegen ist, eine Orientierung, die in einem Winkel zwischen 10 Grad und 40 Grad zu der Spulenachse AS verläuft. Alternativ oder zusätzlich kann generell die Seitenfläche 382 einen insbesondere geradflächigen oder sphärischen Teilfächenabschnitt aufweisen, dessen Orientierung in einem Winkel zwischen 10 Grad und 40 Grad zu der Spulenachse AS verläuft, wobei sich der Winkel in der Null-Lage oder im Referenz-Zustand vom Zentrum Z aus gesehen in eine Richtung öffnet, in der das näher gelegene Permanentmagnet-Segment MS21 der Anordnung von Permanentmagnet-Segmenten MS21, MS22 gelegen ist.

Das zweite Kompensations-Element 390 weist eine erste Seitenfläche 391 auf, die der Anordnung der Permanentmagnet-Segmente MS11, MS12 zugewandt gelegen ist, und eine zweite Seitenfläche 392, die entgegen gesetzt zu der ersten Seitenfläche 391 und der Anordnung der Permanentmagnet-Segmente MS21, MS22 zugewandt gelegen ist. Dabei hat diejenige Seitenfläche 391, die der Anordnung der Permanentmagnet-Segmente MS11, MS12 zugewandt gelegen ist, eine Orientierung, die in einem Winkel zwischen 10 Grad und 40 Grad zu der Spulenachse AS verläuft. Alternativ oder zusätzlich kann generell die Seitenfläche 391 einen insbesondere geradflächigen oder sphärischen Teilfächenabschnitt aufweisen, dessen Orientierung in einem Winkel zwischen 10 Grad und 40 Grad zu der Spulenachse AS verläuft, wobei sich der Winkel in der Null-Lage oder im Referenz-Zustand vom Zentrum Z aus gesehen in eine Richtung öffnet, in der das näher gelegene Permanentmagnet-Segment MS12 der Anordnung von Permanentmagnet-Segmenten MS11, MS12 gelegen ist. Weiterhin hat dabei diejenige Seitenfläche 392, die der Anordnung der Permanentmagnet-Segmente MS21, MS22 zugewandt gelegen ist, eine Orientierung, die in einem Winkel zwischen 10 Grad und 40 Grad zu der Spulenachse AS verläuft. Alternativ oder zusätzlich kann generell die Seitenfläche 392 einen insbesondere geradflächigen oder sphärischen Teilfächenabschnitt aufweisen, dessen Orientierung in einem Winkel zwischen 10 Grad und 40 Grad zu der Spulenachse AS verläuft, wobei sich der Winkel in der Null-Lage oder im Referenz-Zustand vom Zentrum Z aus gesehen in eine Richtung öffnet, in der das näher gelegene Permanentmagnet-Segment MS22 der Anordnung von Permanentmagnet-Segmenten MS21, MS22 gelegen ist.

Die Kompensations-Elemente 380, 390 können jeweils aus einem weichmagnetischen oder einem hartmagnetischen Material gebildet oder hergestellt sein oder bestehen. In der Figur 17 sind die Kompensationselement-Magnetfeldrichtungen R380 bzw. R390 eingetragen. Die Kompensationselement-Magnetfeldrichtung des an dem ersten oder zweiten Spulenabschnitt 75, 76 gelegenen Kompensations-Elements ist dabei derart vorgesehen, dass diese in Richtung oder entlang der Magnetfeldlinien-Richtung des Permanentmagnet-Segments verläuft, das an demselben Spulenabschnitt gelegen ist wie das betreffende Kompensations-Element 380, 390. Dementsprechend verläuft die Kompensationselement-Magnetfeldrichtung R380 in oder entlang der Magnetfeldlinien-Richtung RMS11 des Permanentmagnet-Segments MS11 und der Magnetfeldlinien-Richtung RMS21 des Permanentmagnet-Segments MS21 und verläuft die Kompensationselement-Magnetfeldrichtung R390 in oder entlang der Magnetfeldlinien-Richtung RMS12 des Permanentmagnet-Segments MS12 und der Magnetfeldlinien-Richtung RMS22 des Permanentmagnet-Segments MS22.

Bei Varianten dieser Ausführungsform des Aktors 60 kann dieser derart realisiert sein, dass dieser nur eines der beiden Kompensations-Elemente 380, 390 aufweist, also entweder das am ersten Spulenabschnitt 75 gelegene Kompensations-Element 380 oder das am ersten Spulenabschnitt 76 gelegene Kompensations-Element 390. Dies ist insbesondere der Fall, wenn der Aktor 60 derart realisiert ist, dass auf einer Seite oder auf beiden Seiten der Spule 71 nur ein Permanentmagnet-Segment MS angeordnet ist. In diesen Varianten ist das jeweilige Kompensations-Element 380, 390 an demjenigen Spulenabschnitt 75, 76 gelegen, der das jeweilige Kompensations-Element 380, 390 in der Spulenachse AS gesehen zumindest im Referenz-Zustand den betreffenden Spulenabschnitt 75, 76 zumindest teilweise überlappt oder überdeckt. Die Kompensationselement-Magnetfeldrichtung des an dem ersten oder zweiten Spulenabschnitt 75, 76 gelegenen Kompensations-Elements ist dabei derart vorgesehen, dass diese in Richtung oder entlang der Magnetfeldlinien-Richtung des Permanentmagnet-Segments verläuft, das an demselben Spulenabschnitt gelegen ist wie das betreffende Kompensations-Element 380, 390.Am Beispiel einer Antriebsvorrichtung C, bei der auf jeder Seite der Spule 71 jeweils ein Paar von Permanentmagnet-Segmenten MS11, MS12 bzw. MS21, MS22 gelegen ist, wird im Folgenden an Hand der Figuren 19 bis 21 sowie der Figuren 23 bis 25 beschrieben.

Die in den Figuren 19 bis 21 gezeigte Ausführungsform der Antriebsvorrichtung C weist ein Kompensations-Bauteil auf, das aus einem weichmagnetischen Material gebildet ist. Ausgehend von dem in der Figur 19 gezeigten Referenz-Zustand oder der Nulllage kann die Spule 71 beispielsweise derart elektrisch bestromt werden, dass Strom im ersten Spulenabschnitt 75 in eine Richtung fließt, die zu der Stellkörper-Drehachse D1 hin gerichtet ist und Strom im zweiten Spulenabschnitt 76 in eine Richtung fließt, die von der Stellkörper-Drehachse D1 weg gerichtet ist. Die Richtung des elektrischen Stroms in den Spulenabschnitten 75, 76 sowie die Magnetfeldlinien-Richtungen RMS11, RMS12, RMS21 RMS22 bewirken eine Auslenkung bzw. Bewegung des Aktors 60 mit einer entsprechenden Relativverschiebung zwischen dem Kompensations-Bauteil 80 und den Permanentmagnet-Segmenten MS11, MS12, MS21, MS22. Die Wirkung einer Bewegung des Aktors 60 relativ zu den Permanentmagnet-Segmenten MS11, MS12, MS21, MS22 ist der in der Figur 20 bzw. Figur 21 gezeigte Stellzustand der Antriebsvorrichtung C.

Die aufgrund der Bestromung der Spule 71 in Zusammenwirkung mit den Permanentmagnet-Segmenten bewirkte Auslenkung bzw. Bewegung des Aktors 60 in einen Stellzustand führt zu im Vergleich zum Referenz-Zustand gemäß Fig. 19 existierenden unterschiedlichen Magnetfeldlinienverteilungen, die den Figuren 19 bis 21 ebenfalls zu entnehmen sind. Aufgrund der resultierenden unsymmetrischen Magnetfeldlinienverteilung in einem Stellzustand der Antriebsvorrichtung kommt es zur gewünschten Ausbildung bzw. Verstärkung von Anziehungskräften zwischen dem Kompensations-Bauteil 80 und den entsprechenden Permanentmagnet-Segmenten MS11, MS12, MS21, MS22, welche die durch die Bestromung der Spule 71 bewirkte Auslenkung bzw. Bewegung des Aktors unterstützen und der der aufgrund dieser Auslenkung analogen Deformation der Festkörpergelenke 21 oder 22 entstehenden Rückstellkraft entgegenwirken bzw. diese teilweise oder vollständig kompensieren.

Die zwischen Kompensations-Bauteil 80 und den entsprechenden Permanentmagnet-Segmenten MS11, MS12, MS21, MS22 wirkende Kraft ist von der Auslenkung des Stellkörpers 10 abhängig und größer dem Betrag = 0, sobald der Aktor 60 aus dem Referenz-Zustand heraus ausgelenkt wird. Die Auslenkung des Stellkörpers 10 wird durch den Strom, der durch die Spule 71 fließt, bestimmt: Die stromabhängige Aktorkraft entsteht aus dem Zusammenspiel zwischen dem Magnetfeld der Permanentmagnet-Segmente und der Stromdichte innerhalb der Spule 71 (Lorenzkraft). Die sich zwischen dem Kompensations-Bauteil 80 und den Permanentmagnet-Segmenten ausbildende Anziehungskraft ist weitgehend unabhängig vom durch die Spule geleiteten elektrischen Strom. Die Kraftwirkung zwischen Kompensations-Bauteil 80 und den Permanentmagnet-Segmenten entsteht aus dem Bestreben der Energieminimierung zwischen dem äußeren Magnetfeld, das durch die Permanentmagnet-Segmente verursacht wird, und gegebenenfalls dem eigenen Magnetfeld des Kompensations-Bauteils 80 bzw. dessen magnetischer Permeabilität, je nach Ausführungsform des Aktors 60.

Wenn dagegen beispielsweise die Spule 71 derart elektrisch bestromt wird, dass Strom im ersten Spulenabschnitt 75 in eine Richtung fließt, die von der Stellkörper-Drehachse D1 weg gerichtet ist und Strom im zweiten Spulenabschnitt 76 in eine Richtung fließt, die zu der Stellkörper-Drehachse D1 hin gerichtet ist, bewirkt dies zusammen mit den Magnetfeldlinien-Richtungen RMS11,RMS12, RMS21 und RMS22 eine Auslenkung des Aktors 60 in einer zur Auslenkung gemäß Figur 20 entgegengesetzten Richtung, wie in Figur 21 gezeigt.

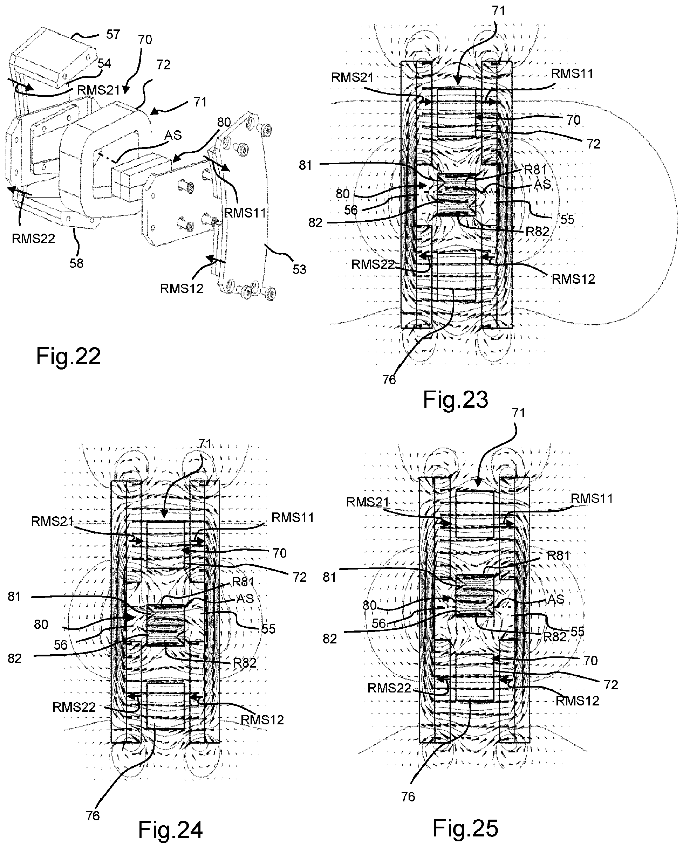

Die in den Figuren 23 bis 25 gezeigte Ausführungsform der Antriebsvorrichtung C weist ein Kompensations-Bauteil 80 auf, das aus einem hartmagnetischen Material besteht, so dass Magnetfeldlinien-Richtungen R81 und R82 auftreten, wie es an Hand der Figur 15 hierin beschrieben ist. Dabei entspricht der in der Figur 24 gezeigte Stellzustand dem in der Figur 20 gezeigten Stellzustand mit der an Hand dieser Figur 20 beschriebenen Richtung des elektrischen Stroms in der Spule 71 und Wirkungsweise. Weiterhin entspricht der in der Figur 25 gezeigte Stellzustand dem in der Figur 21 gezeigten Stellzustand mit der an Hand dieser Figur 21 beschriebenen Richtung des elektrischen Stroms in der Spule 71 und Wirkungsweise. Durch die Verwendung eines hartmagnetischen Materials für das Kompensations-Bauteil 80 kann die vorstehend beschriebene Wirkung der gegenseitigen Anziehung zwischen Kompensations-Bauteil 80 und den Permanentmagnet-Segmenten MS11, MS12, MS21, MS22 verstärkt werden.

Die an Hand der Figuren 19 bis 21 sowie der Figuren 23 bis 25 beschriebenen Wirkungsweisen treffen auch zu, wenn die Antriebsvorrichtung C ein Paar von Permanentmagnet-Segmenten MS11, MS12 nur auf einer ersten Seite des Aktors 60 aufweist oder wenn die Antriebsvorrichtung C ein Paar von Permanentmagnet-Segmenten MS21, MS22 nur auf einer zweiten Seite des Aktors 60 aufweist.

Die an Hand der Figuren 19 bis 21 sowie der Figuren 23 bis 25 beschriebenen Wirkungsweisen treffen auch zu, wenn die Antriebsvorrichtung C nur ein Permanentmagnet-Segment, eine Spule 71 und ein Kompensations-Bauteil 80 aufweist. Dabei kann insbesondere vorgesehen sein, dass das einzelne Permanentmagnet-Segment der Antriebsvorrichtung C in einem Referenz-Zustand oder der Nulllage, in der Spulenachse AS gesehen, zumindest abschnittsweise in dem ersten Spulenabschnitt 75 oder dem zweiten Spulenabschnitt 76 gelegen ist, wobei der erste Spulenabschnitt 75 und der zweite Spulenabschnitt 76 zumindest abschnittsweise entlang der Richtung des Abstands zwischen Stellkörper-Drehachse D1 und Spulenachse AS verläuft, insbesondere wenn dieser Abstand durch das Zentrum Z verläuft.

Die an Hand der Figuren 19 bis 21 sowie der Figuren 22 bis 25 beschriebene Funktionsweise erfolgt analog dazu in umgekehrter Weise, wenn der Aktor 60 nach der in den Figuren 17 und 18 dargestellten Ausführungsform oder als Variante davon realisiert ist. In einer Weiterführung der erfindungsgemäßen Stellvorrichtung 1 kann vorgesehen sein, dass die Anordnung aus dem Basis-Bauteil B1, dem Stellkörper 10, der Festkörper-Gelenkvorrichtung 20 und zumindest eine Antriebsvorrichtung C, die nach einer der hierin beschriebenen Ausführungsformen realisiert ist und mit der der Stellkörper 10 relativ zum Basis-Bauteil B1 verstellbar ist, mittels einer Gelenkvorrichtung und insbesondere einer Festkörper-Gelenkvorrichtung 420 in einem zweiten Basis-Bauteil B2 drehbar gelagert ist, wobei die Drehlagerung eine Basisbauteil-Drehachse D2 bereitstellt, die quer zur Stellkörper-Drehachse D1 und insbesondere vertikal zur Stellkörper-Drehachse D1 verläuft. Dadurch ist eine kardanische Lagerung des Stellkörpers 10 an dem zweiten Basis-Bauteil B2 realisiert.

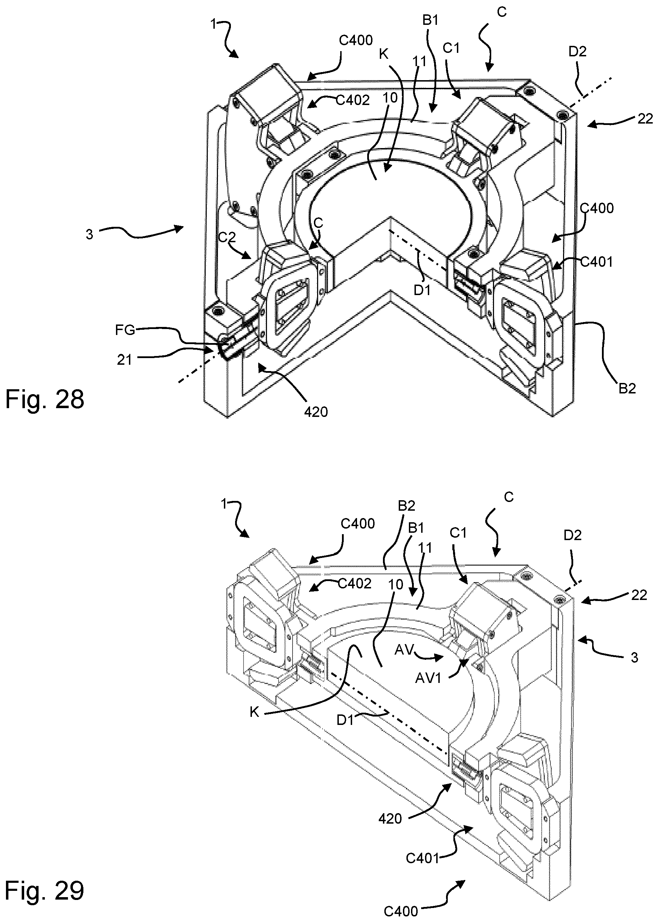

Eine solche Ausführungsform der Stellvorrichtung 1 ist in den Figuren 26 bis 29 gezeigt. An einander in Bezug auf die Basisbauteil-Drehachse D2 gegenüber liegenden Seiten des zweiten Basis-Bauteils B2 ist das zweite Basis-Bauteil B2 an das erste Basis-Bauteil B1 mittels jeweils einer Antriebsvorrichtung C400 gekoppelt, wobei die Antriebsvorrichtung C400 nach einer der hierin beschriebenen Varianten der Antriebsvorrichtung gemäß der Figuren 1 bis 25 ausgeführt sein kann. Bei jeder dieser Varianten ist allerdings die Festkörpergelenk-Drehachse D1 durch die Basisbauteil-Drehachse D2 zu ersetzen.

Insbesondere ist bei dieser Ausführungsform der Antriebsvorrichtung C400, die an das Basis-Bauteil B1 und das zweite Basis-Bauteil B2 gekoppelt ist, ist diese in einem Abstand H400 zu der Basisbauteil-Drehachse D2 gelegen, so dass eine Stellbewegung der Antriebsvorrichtung C eine Drehung des zweiten Basis-Bauteils B2 um die Basisbauteil-Drehachse D2 bewirkt, wobei die Antriebsvorrichtung C400 aufweist:
einen Aktor 60 mit einer elektrischen Spule 71, deren Spulenachse AS entlang der Basisbauteil-Drehachse D2 verläuft, und mit einem Kompensations-Bauteil 80, das aus einem hartmagnetischen oder einem weich-magnetischem Material gebildet ist und außerhalb eines Abschnitts der Spule 71 angeordnet ist, wobei das Kompensations-Bauteil 80 und die Spule 71 relativ zueinander mechanisch fixiert ist,
zumindest ein Permanentmagnet-Segment MS, wobei das Permanentmagnet-Segment MS in einem berührungslosen Abstand in einer in Spulenachse AS verlaufenden Richtung neben der Spule 71 gelegen ist, wobei zumindest in einem Bewegungsbereich des zumindest einen Permanentmagnet-Segments MS relativ zum Aktor 60, in der Spulenachse AS gesehen, ein Permanentmagnet-Segments MS des zumindest einen Permanentmagnet-Segments MS einen Abschnitt der Spule 71 zumindest abschnittsweise überlappt,
wobei die Lagerung der Antriebsvorrichtung C an der Stellvorrichtung 1 zur Ausführung einer Stellbewegung nach einer der beiden Alternativen (a), (b) vorgesehen ist:
   (a) der Aktor 60 ist an das Basis-Bauteil B1 gekoppelt und das Permanentmagnet-Segment MS ist an die Stellkörper-Anschlussvorrichtung AV gekoppelt,
   (b) der Aktor 60 ist an die Stellkörper-Anschlussvorrichtung AV gekoppelt und das Permanentmagnet-Segment MS ist an das Basis-Bauteil B1 gekoppelt.

Bei diesen Ausführungsformen der Stellvorrichtung 1 kann der Aktor 60 nach einer der hierin beschriebenen Varianten ausgeführt sein. Auch kann die Antriebsvorrichtung C nach einer der hierin beschriebenen Varianten ausgeführt sein und insbesondere mit mehreren Permanentmagnet-Segmenten MS wie hierin beschrieben ausgeführt sein.

### Bezugszeichen

- 1: Stellvorrichtung
- 3: Stellkörper-Gehäuse
- 10: Stellkörper
- 11: Stellkörper-Rahmen
- 15: Drehlagerungsaufnahme
- 16: Drehlagerungsaufnahme
- 20: Festkörper-Gelenkvorrichtung
- 21: erstes Festkörpergelenk
- 22: zweites Festkörpergelenk
- 25: Stellkörper-Anschlussabschnitt
- 26: Stellkörper-Anschlussabschnitt
- 27: Stellkörper-Anschlussabschnitt
- 28: Stellkörper-Anschlussabschnitt
- 53: Magnetsegment-Träger
- 54: Magnetsegment-Träger
- 55: Spalt
- 56: Spalt
- 57: Verbindungsstück
- 58: Verbindungsstück
- 60: Aktor
- 63: Befestigungsteil
- 64: Befestigungsteil
- 65: Verbindungselement
- 67: Ausnehmung
- 68: Ausnehmung
- 70: Spulenvorrichtung
- 71: elektrische Spule
- 72: Spulengehäuse
- 75: erster Spulenabschnitt
- 76: zweiter Spulenabschnitt
- 80: Kompensations-Bauteil
- 81: Polarisierungsbereich
- 82: Polarisierungsbereich
- 110: Kompensations-Bauteil
- 111: Oberfläche
- 113: Teilfläche
- 114: Teilfläche
- 115: Linie
- 120: Kompensations-Bauteil
- 121: Oberfläche
- 123: Teilfläche
- 124: Teilfläche
- 125: Linie
- 380: Kompensations-Element
- 381: Seitenfläche
- 382: Seitenfläche
- 390: Kompensations-Element
- 391: Seitenfläche
- 392: Seitenfläche
- 420: Festkörper-Gelenkvorrichtung
- AS: Spulenachse
- AV: Stellkörper-Anschlussvorrichtung
- B1: Basis-Bauteil
- B2: zweites Basis-Bauteil
- C: Antriebsvorrichtung
- C1: Antriebsvorrichtung
- C2: Antriebsvorrichtung
- C400: Antriebsvorrichtung
- C401: Antriebsvorrichtung
- C402: Antriebsvorrichtung
- D1: Festkörpergelenk-Drehachse
- D2: Basisbauteil-Drehachse
- FG: Achsteil
- H: Abstand
- MS: Permanentmagnet-Segment
- MS11: Permanentmagnet-Segment
- MS12: Permanentmagnet-Segment tt
- MS21: Permanentmagnet-Segment
- MS22: Permanentmagnet-Segment
- R81: Magnetfeldlinien-Richtung des Polarisierungsbereichs 81
- R82: Magnetfeldlinien-Richtung des Polarisierungsbereichs 82
- R380: Kompensationselement-Magnetfeldrichtung
- R390: Kompensationselement-Magnetfeldrichtung
- RMS11: Magnetfeldlinien-Richtung des Permanentmagnet-Segments MS11
- RMS12: Magnetfeldlinien-Richtung des Permanentmagnet-Segments MS12
- RMS21: Magnetfeldlinien-Richtung des Permanentmagnet-Segments MS21
- RMS22: Magnetfeldlinien-Richtung des Permanentmagnet-Segments MS22
- Z: Zentrum des Stellkörpers 10

## Patentansprüche

1. Stellvorrichtung (1), aufweisend: ein Basis-Bauteil (B1), einen Stellkörper (10), der an dem Basis-Bauteil (B1) um eine Stellkörper-Drehachse drehbar gelagert ist, und zumindest eine Antriebsvorrichtung (C), die an das Basis-Bauteil (B1) und an eine Stellkörper-Anschlussvorrichtung (AV) gekoppelt ist und die in einem Abstand (H) zu der Stellkörper-Drehachse gelegen ist, so dass eine Stellbewegung der Antriebsvorrichtung (C) eine Drehung des Stellkörpers (10) um die Stellkörper-Drehachse bewirkt, wobei die Antriebsvorrichtung (C) aufweist:
einen Aktor (60), der eine elektrische Spule (71) mit einer Spulenachse (AS), die entlang der Stellkörper-Drehachse verläuft, und ein Kompensations-Bauteil (80) aufweist, wobei das Kompensations-Bauteil (80) und die Spule (71) relativ zueinander mechanisch fixiert sind,
wobei das Kompensations-Bauteil (80) ein magnetisierbares oder magnetisiertes Material aufweist oder aus einem solchen Material besteht,
wobei die Stellvorrichtung (1) zumindest ein Festkörpergelenk (21) aufweist, mit dem der Stellkörper (10) an dem Basis-Bauteil (B1) um eine Festkörpergelenk-Drehachse (D1) als die Stellkörper-Drehachse drehbar gelagert ist,
wobei die Stellvorrichtung (1) zumindest ein Permanentmagnet-Segment (MS) aufweist, das eine die Längserstreckung desselben definierende Oberfläche aufweist, deren Orientierung entlang der Spulenachse (AS) gerichtet ist, und das in einem berührungslosen Abstand in einer in Spulenachse (AS) verlaufenden Richtung neben der Spule (71) gelegen ist, wobei die Spule (71), das zumindest eine Permanentmagnet-Segment (MS) und das Kompensations-Bauteil (80) derart ausgebildet sind, dass bei Aktuierung einer jeweiligen Antriebsvorrichtung eine Relativbewegung zwischen der Spule (71) und dem zumindest einen Permanentmagnet-Segment (MS) verursacht werden kann, deren RelativbewegungsRichtung quer zu einer Ebene verläuft, die von der Festkörpergelenk-Drehachse (D1) des Stellkörpers (10) und der Stellkörper-Anschlussvorrichtung (AV), an der der jeweilige Aktor gekoppelt ist, aufgespannt ist, wobei mit der Relativbewegung eine von dem Festkörpergelenk (21) ausgeübte Rückstellkraft zumindest teilweise von einer sich ändernden Haltekraft kompensiert wird, die aus dem magnetischen Zusammenwirken von dem zumindest einen Permanentmagnet-Segment (MS) und dem Kompensations-Bauteil (80) resultiert.

2. Stellvorrichtung (1) nach dem Anspruch 1, wobei die Stellvorrichtung (1) eine zweite Antriebsvorrichtung (C) aufweist, so dass die Stellvorrichtung (1) eine erste Antriebsvorrichtung (30) und eine zweite Antriebsvorrichtung (40) aufweist, die jeweils an eine Stellkörper-Anschlussvorrichtung (AV1, AV2) des Stellkörpers (10) gekoppelt sind, wobei sich die Anschlussvorrichtungen (AV) in Bezug auf die Festkörpergelenk-Drehachse (A1) symmetrisch gegenüber liegen.

3. Stellvorrichtung (1) nach einem der voranstehenden Ansprüche, wobei die Stellvorrichtung (1) ein zumindest abschnittsweise hohlring-förmiges Spulengehäuse (72) aufweist, in dem die Spule (71) angeordnet ist, wobei die Umfangsrichtung der Spule (71) entlang der Umfangsrichtung des Spulengehäuses (72) verläuft.

4. Stellvorrichtung (1) nach dem Anspruch 3, wobei zumindest ein Kompensations-Bauteil (80) in der Spulenachse (AS) gesehen in dem das Spulengehäuse (72) umlaufenden Außenraum angeordnet ist.

5. Stellvorrichtung (1) nach dem Anspruch 3 oder 4, wobei das Kompensations-Bauteil (80) in der Spulenachse (AS) gesehen in dem außerhalb des äußeren Umfangs des Spulengehäuses (72) gelegenen Außenraum angeordnet ist.

6. Stellvorrichtung (1) nach einem der voranstehenden Ansprüche, wobei zumindest eine Antriebsvorrichtung (C) jeweils zwei Permanentmagnet-Segmente (MS11, MS12) aufweist, die auf einem Magnetsegment-Träger (53) befestigt sind, wobei die Permanentmagnet-Segmente (MS11, MS12) von der Stellkörper-Drehachse (D1) aus gesehen auf derselben Seite des Aktors (60) gelegen und in der Richtung der Relativbewegung zwischen Spule (71) und Permanentmagnet-Segmente (MS11, MS12) hintereinander angeordnet sind.

7. Stellvorrichtung (1) nach einem der voranstehenden Ansprüche, wobei eine Antriebsvorrichtung (C) jeweils zwei Paare von Permanentmagnet-Segmenten (MS11, MM12, MS21, MS22) aufweist, und ein erstes Paar von Permanentmagnet-Segmenten (MS11, MM12) auf einem ersten Magnetsegment-Träger (53) und ein zweites Paar von Permanentmagnet-Segmenten (MS21, MS22) auf einem zweiten Magnetsegment-Träger (54) angeordnet ist, wobei die Paare von Permanentmagnet-Segmenten (MS11, MS12; MS21, MS22) von der Stellkörper-Drehachse (D1) aus gesehen auf zueinander unterschiedlichen Seiten des Aktors (60) gelegen sind.

8. Stellvorrichtung (1) nach dem Anspruch 6 oder 7, wobei zumindest eine Antriebsvorrichtung (C) zumindest eine Anordnung von zwei Permanentmagnet-Segmenten (MS11, MS12), die von einem Zentrum Z des Stellkörpers (10) aus gesehen auf zumindest einer Seite der Spule (71) gelegen sind, und ein Kompensations-Bauteil (80) aufweist, das zumindest eine Seitenfläche (111), die jeweils einer Anordnung der Permanentmagnet-Segmente (MS11, MS12) zugewandt gelegen ist, aufweist, wobei die Seitenfläche (111) zumindest einen Teilfächenabschnitt (113, 114) aufweist, dessen Orientierung jeweils in einem Winkel zwischen 10 Grad und 40 Grad zu der Spulenachse (AS) verläuft, wobei sich der Winkel jeweils in der Null-Lage oder im ReferenzZustand vom Zentrum Z aus gesehen in eine Richtung öffnet, in der das jeweils näher gelegene Permanentmagnet-Segment (MS11, MS12) der Anordnung von Permanentmagnet-Segmenten (MS11, MS12) gelegen ist.

9. Stellvorrichtung (1) nach einem der voranstehenden Ansprüche, wobei die Stellvorrichtung (1) zumindest einen oder mehrere der Sensoren (8a), (8b), (8c) aufweist:
(8a) einen Strommesser, der den Strom in der Spule (71) erfasst,
(8b) einen Drehwinkel-Sensor, der in der Festkörper-Gelenkvorrichtung oder in einem der Festkörpergelenke eine Drehung zur Ermittlung einer Drehbewegung des Stellkörpers 10 gegenüber dem Basis-Bauteil B1 erfasst,
(8c) einen im Aktor (60) angeordneten Magnetfeldsensor, der die Stärke und die Richtung oder die Stärke oder die Richtung des Magnetfeldes in dem von der Spule (71) umlaufenden Raum erfasst,
wobei die Stellvorrichtung eine Datenmanagement-Vorrichtung aufweist, die funktional mit dem zumindest einen jeweiligen Sensor gemäß (8a), (8b), (8c) verbunden ist und aufweist: eine Schnittstellen-Funktion, mit der Signale, die von dem zumindest einen Sensor erfasst, empfangen und zu speicherbaren Sensordaten umgewandelt und gespeichert werden, und eine Übermittlungs-Funktion, mit der die Sensordaten an eine Empfangsvorrichtung einer Auswertungs-Vorrichtung übermittelt werden.

10. Stellsystem mit einer Stellvorrichtung (1) nach dem Anspruch 9 und einer Auswertungs-Vorrichtung, die aufweist:
eine Empfangsfunktion, die die Sensordaten von der Übermittlungs-Funktion empfängt,
eine Auswertungsfunktion, die aus den Sensordaten einen Betriebszustands-Wert für die Stellvorrichtung (1) zuordnet.

11. Stellsystem nach dem Anspruch 10, wobei die Auswertungsfunktion eine Wartungsfunktion aufweist, die eine Mehrzahl von Sensordaten mit zumindest einem Sollwert vergleicht und bei Überschreitung oder Unterschreitung des Sollwertes den Betriebszustands-Wert erzeugt

12. Stellsystem nach dem Anspruch 10 oder 11, wobei die Auswertungs-Vorrichtung eine Anzeige-Vorrichtung aufweist, die mit der Auswertungsfunktion funktional verbunden ist und den Betriebszustands-Wert anzeigt.

13. Stellsystem nach einem der Ansprüche 10 bis 12, wobei die Auswertungsfunktion zumindest einen Betriebszustands-Wert ermittelt, der auf der Anzeige-Vorrichtung einen oder mehrere der folgenden Betriebszustände der Stellvorrichtung (1) anzeigt:
(Z1) die Stellvorrichtung (1) befindet sich im Normalbetrieb;
(Z3) die Stellvorrichtung (1) ist defekt;
(Z3) für die Stellvorrichtung (1) ist eine Wartungsmaßnahme oder Sicherheitsüberprüfung fällig.

14. Stellsystem nach dem Anspruch 10, wobei die Auswertungsfunktion eine Simulationsfunktion mit einem mathematischen Modell der Stellvorrichtung (1) und mit einer Übertragungsfunktion aufweist, wobei die Übertragungsfunktion eine Mehrzahl von Sensordaten dem mathematischen Modell zuführt und das mathematische Modell aus den Sensordaten Stellzustandswerte einer oder mehrerer der folgenden Komponenten ermittelt:
(T1) der Antriebsvorrichtung
(T2) des Stellkörpers.

15. Computerprogrammprodukt, das eine Auswertungsfunktion aufweist, die aus in der Stellvorrichtung (1) nach Anspruch 9 ermittelten Sensordaten einen Betriebszustands-Wert für die Stellvorrichtung (1) zuordnet,
wobei die Auswertungsfunktion eine Simulationsfunktion mit einem mathematischen Modell einer Stellvorrichtung (1) nach einem der Ansprüche 1 bis 7 und mit einer Übertragungsfunktion aufweist, wobei die Übertragungsfunktion eine Mehrzahl von Sensordaten dem mathematischen Modell zuführt und das mathematische Modell aus den Sensordaten Stellzustandswerte einer oder mehrerer der folgenden Komponenten ermittelt:
(T1) der Antriebsvorrichtung
(T2) des Stellkörpers.

16. Computerprogrammprodukt, das ein mathematisches Modell der Stellvorrichtung (1) nach einem der Ansprüche 1 bis 7 aufweist, wobei das mathematische Modell der Stellvorrichtung (1) aufgrund zumindest eines Eingangswertes für ein elektrisches Eingangssignal für die Spule Stellzustandswerte einer oder mehrerer der folgenden Komponenten ermittelt:
(T1) der Antriebsvorrichtung
(T2) des Stellkörpers.

## Claims

1. Adjustment device (1), comprising: a base component (B1), an adjustment body (10), which is rotatably hinged on the base component (B1) about an adjustment body rotation axis, and at least one drive device (C), which is coupled to the base component (B1) and to an adjustment body connection device (AV) and which is situated at a distance (H) from the adjustment body rotation axis such that an adjustment movement of the drive device (C) causes rotation of the adjustment body (10) about the adjustment body rotation axis, the drive device (C) comprising:
an actor (60) which comprises an electrical coil (71) with a coil axis (AS) extending along the adjustment body rotation axis and a compensation component (80), wherein the compensation component (80) and the coil (71) are mechanically fixed relative to each other,
wherein the compensation component (80) comprises a magnetizable or magnetized material or consists of such a material,
wherein the adjustment device (1) comprises at least one permanent magnet segment (MS), which comprises a surface defining a longitudinal extent of the same, the orientation of which is directed along the coil axis (AS), and which is situated beside the coil (71) at a contactless distance in a direction running in the coil axis (AS), wherein the coil (71), the at least one permanent magnet segment (MS) and the compensation component (80) are
configured such that, when a respective drive device is actuated, a relative movement between the coil and the at least one permanent magnet segment (MS) can be caused, the relative movement direction of which runs transversely to a plane which is spanned by the flexure hinge rotation axis (D1) of the adjustment body (10) and the adjustment body connection device (AV) to which the respective actor is coupled, wherein, with the relative movement, a restoring force exerted by the flexure hinge is at least partially compensated by a changing holding force resulting from the magnetic interaction of the at least one permanent magnet segment (MS) and the compensation component (80).

2. Adjustment device (1) according to claim 1, wherein the adjustment device (1) comprises a second drive device (C), such that the adjustment device (1) comprises a first drive device (30) and a second drive device (40), each of which is coupled to an adjustment body connection device (AV1, AV2) of the adjustment body (10), wherein the connection devices (AV) are symmetrically opposite with respect to the flexure hinge rotation axis (A1).

3. Adjustment device (1) according to one of the preceding claims, wherein the adjustment device (1) comprises a coil housing (72) which is at least in a section hollow-ringshaped and in which the coil (71) is arranged, wherein the circumferential direction of the coil (71) runs along the circumferential direction of the coil housing (72).

4. Adjustment device (1) according to claim 3, wherein at least one compensation component (80), as seen in the coil axis (AS), is arranged in the outer space surrounding the coil housing (72).

5. Adjustment device (1) according to claim 3 or 4, wherein the compensation component (80) is arranged in the outer space located outside the outer circumference of the coil housing (72) as seen in the coil axis (AS).

6. Adjustment device (1) according to one of the preceding claims, wherein at least one drive device (C) comprises in each case two permanent magnet segments (MS11, MS12) which are fastened on a magnetic segment support (53), wherein the permanent magnet segments (MS11, MS12) are situated on the same side of the actor (60) as seen from the adjustment body rotation axis (D1) and are arranged one behind the other in the direction of the relative movement between the coil (71) and permanent magnet segments (MS11, MS12).

7. Adjustment device (1) according to one of the preceding claims, wherein a drive device (C) comprises two pairs of permanent magnet segments (MS11, MM12, MS21, MS22) in each case, and wherein a first pair of permanent magnet segments (MS11, MM12) is arranged on a first magnetic segment support (53) and a second pair of permanent magnet segments (MS21, MS22) is arranged on a second magnetic segment support (54), wherein the pairs of permanent magnet segments (MS11, MS12; MS21, MS22) are located on mutually different sides of the actuator (60) as seen from the adjustment body rotation axis (D1).

8. Adjustment device (1) according to claim 6 or 7, wherein at least one drive device (C) comprises at least one arrangement of two permanent magnet segments (MS11, MS12), which are located on at least one side of the coil (71) as seen from a center Z of the adjustment body (10), and a compensation component (80), which comprises at least one side surface (111)which is situated in each case facing an arrangement of the permanent magnet segments (MS11, MS12), wherein the side surface (111) comprises at least one surface portion (113, 114), the orientation of which runs in each case at an angle between 10 degrees and 40 degrees with respect to the coil axis (AS), wherein the angle in each case, in the zero position or in the reference state, viewed from the center Z, opens in a direction in which the respectively closer permanent magnet segment (MS11, MS12) of the arrangement of permanent magnet segments (MS11, MS12) is situated.

9. Adjustment device (1) according to one of the preceding claims, wherein the adjustment device (1) comprises at least one or more of the sensors (8a), (8b), (8c):
(8a) a current meter which captures the current in the coil (71),
(8b) a rotation angle sensor which, in the flexure hinge device or in one of the flexure hinges, captures a rotation for determining a rotational movement of the adjustment body 10 with respect to the base component B1,
(8c) a magnetic field sensor arranged in the actor (60), which captures the strength and the direction or the strength or the direction of the magnetic field in the space surrounding the coil (71),
wherein the adjustment device comprises a data management device operatively connected to the at least one respective sensor according to (8a), (8b), (8c) and comprises: an interface function with which signals captured by the at least one sensor are received and converted to storable sensor data and stored, and a transmission function by which the sensor data are transmitted to a receiving device of an evaluation device.

10. An adjustment system comprising an actuator (1) according to claim 9 and an evaluation device comprising:
a receiving function which receives the sensor data from the transmission function,
an evaluation function which assigns an operating state value for the adjustment device (1) from the sensor data.

11. The adjustment system according to claim 10, wherein the evaluation function comprises a maintenance function which compares a plurality of sensor data with at least one setpoint value and, if the setpoint value is exceeded or undershot, generates the operating state value.

12. The adjustment system according to claim 10 or 11, wherein the evaluation device comprises a display device operatively connected to the evaluation function and indicating the operating state value.

13. The adjustment system according to one of claims 10 to 12, wherein the evaluation function determines at least one operating state value which indicates one or more of the following operating states of the adjustment device (1) on the display device:
(Z1) the adjustment device (1) is in normal operation;
(Z3) the adjustment device (1) is defective;
(Z3) for the adjustment device (1), a maintenance measure or safety check is due.

14. The adjustment system according to claim 10, wherein the evaluation function comprises a simulation function with a mathematical model of the adjustment device (1) and with a transfer function, wherein the transfer function supplies a plurality of sensor data to the mathematical model and the mathematical model from the sensor data determines control state values of one or more of the following components:
(T1) the drive device
(T2) the adjustment body.

15. Computer program product which comprises an evaluation function which assigns an operating state value for the adjustment device (1) from sensor data determined in the adjustment device (1) according to claim 9,
wherein the evaluation function comprises a simulation function with a mathematical model of an adjustment device (1) according to one of claims 1 to 7 and with a transfer function, wherein the transfer function supplies a plurality of sensor data to the mathematical model and wherein the mathematical model from the sensor data determines control state values of one or more of the following components:
(T1) of the drive device
(T2) of the adjustment body.

16. Computer program product which comprises a mathematical model of the adjustment device (1) according to one of claim 1 to 7, wherein the mathematical model of the adjustment device (1) determines control state values of one or more of the following components on the basis of at least one input value for an electrical input signal for the coil:
(T1) of the drive device
(T2) the adjustment body.

## Revendications

1. Dispositif de réglage (1), comportant : un composant de base (B1), un corps de réglage (10), qui est logé sur le composant de base (B1) pouvant tourner autour d'un axe de rotation de corps fixe, et au moins un dispositif d'entraînement (C), qui est couplé au composant de base (B1) et à un dispositif de raccordement de corps de réglage (AV) et est situé à une distance (H) par rapport à l'axe de rotation de corps de réglage, de telle manière qu'un mouvement de réglage du dispositif d'entraînement (C) entraîne une rotation du corps de réglage (10) autour de l'axe de rotation du corps de réglage, sachant que le dispositif d'entraînement (C) comporte :
un actionneur (60), qui comporte une bobine électrique (71) avec un axe de bobine (AS), qui passe le long de l'axe de rotation de corps de réglage, et comporte un composant de compensation (80), sachant que le composant de compensation (80) et la bobine (71) sont fixés de façon mécanique l'un par rapport à l'autre,
sachant que le composant de compensation (80) comporte un matériau magnétisable ou magnétisé ou est composé d'un matériau de ce type,
sachant que le dispositif de réglage (1) comporte au moins une articulation de corps fixe (21), avec laquelle le corps fixe (10) est logé pouvant tourner sur le composant de base (B1) autour d'un axe de rotation d'articulation de corps fixe (D1) en tant que l'axe de rotation de corps de réglage,
sachant que le dispositif de réglage (1) comporte au moins un segment à aimant permanent (MS), qui comporte une surface définissant l'extension longitudinale de celui-ci, dont l'orientation est dirigée le long de l'axe de bobine (AS), et est située à une distance sans contact dans une direction passant dans l'axe de bobine (AS) près de la bobine (71), sachant que la bobine (71), au moins un segment à aimant permanent (MS) et le composant de compensation (80) sont constitués de telle manière, que lors de l'actionnement d'un dispositif d'entraînement respectif, un mouvement relatif peut être causé entre la bobine (71) et au moins un segment à aimant permanent (MS), dont la direction de mouvement relatif passe transversalement à un plan, qui s'étend de l'axe de rotation d'articulation de corps fixe (D1) du corps fixe (10) et du dispositif de raccordement de corps de réglage (AV) auquel est couplé l'actionneur respectif, sachant qu'avec le mouvement relatif, une force de rappel exercée par l'articulation de corps fixe (21) est au moins en partie compensée par une force de retenue se modifiant, qui résulte de l'action conjointe magnétique d'au moins un segment à aimant permanent (MS) et du composant de compensation (80).

2. Dispositif de réglage (1) selon la revendication 1, sachant que le dispositif de réglage (1) comporte un deuxième dispositif d'entraînement (C), de telle manière que le dispositif de réglage (1) comporte un premier dispositif d'entraînement (30) et un deuxième dispositif d'entraînement (40), qui sont respectivement couplés à un dispositif de raccordement de corps de réglage (AV1, AV2) du corps de réglage (10), sachant que les dispositifs de raccordement (AV) s'opposent de façon symétrique par rapport à l'axe de rotation d'articulation du corps fixe (A1).

3. Dispositif de réglage (1) selon l'une quelconque des revendications précédentes, sachant que le dispositif de réglage (1) comporte au moins en partie un boîtier de bobine (72) de forme annulaire creuse, dans lequel est disposée la bobine (71), sachant que le sens périphérique de la bobine (71) passe le long du sens périphérique du boîtier de bobine (72).

4. Dispositif de réglage (1) selon la revendication 3, sachant qu'au moins un composant de compensation (80) est, vu dans l'axe de bobine (AS), disposé dans l'espace extérieur entourant le boîtier de bobine (72) .

5. Dispositif de réglage (1) selon la revendication 3 ou 4, sachant que le composant de compensation (80), vu dans l'axe de bobine (AS), est disposé dans l'espace extérieur situé en dehors de la périphérie extérieure du boîtier de bobine (72).

6. Dispositif de réglage (1) selon l'une quelconque des revendications précédentes, sachant qu'au moins un dispositif d'entraînement (C) comporte respectivement deux segments à aimant permanent (MS11, MS12), qui sont fixés sur un support de segments d'aimant (53), sachant que les segments à aimant permanent (MS11, MS12), vus de l'axe de rotation du corps de réglage (D1), sont situés sur le même côté de l'actionneur (60) et sont disposés l'un derrière l'autre dans la direction du mouvement relatif entre la bobine (71) et les segments à aimant permanent (MS11, MS12).

7. Dispositif de réglage (1) selon l'une quelconque des revendications précédentes, sachant qu'un dispositif d'entraînement (C) comporte respectivement deux paires de segments à aimant permanant (MS11, MM12, MS21, MS22), et une première paire de segments à aimant permanent (MS11, MM12) est disposée sur un premier support de segments d'aimant (53) et une deuxième paire de segments à aimant permanent (MS21, MS22) sur un deuxième support de segments d'aimant (54), sachant que les paires de segments à aimant permanent (MS11, MS12, MS21, MS22) sont, vus de l'axe de rotation du corps de réglage (D1), situés sur des côtés de l'actionneur (60) différents l'un de l'autre.

8. Dispositif de réglage (1) selon la revendication 6 ou 7, sachant qu'au moins un dispositif d'entraînement (C) comporte au moins un agencement de deux segments à aimant permanent (MS11, MS12), qui sont, vus d'un centre Z du corps de réglage (10), situés sur au moins un côté de la bobine (71), et un composant de compensation (80), qui comporte au moins une surface latérale (111), qui est située tournée respectivement vers un agencement des segments à aimant permanent (MS11, MS12), sachant que la surface latérale (111) comporte au moins une section de surface partielle (113, 114), dont l'orientation passe respectivement dans un angle se situant entre 10 degrés et 40 degrés par rapport à l'axe de bobine (AS), sachant que l'angle s'ouvre respectivement dans la position zéro ou à l'état de référence, vu du centre Z, dans une direction, dans laquelle est situé le segment à aimant permanent (MS11, MS12) respectivement situé plus près de l'agencement des segments à aimant permanent (MS11, MS12).

9. Dispositif de réglage (1) selon l'une quelconque des revendications précédentes, sachant que le dispositif de réglage (1) comporte au moins un ou plusieurs détecteurs (8a), (8b), (8c) :
(8a) un ampèremètre, qui saisit le courant dans la bobine (71),
(8b) un détecteur d'angle de rotation, qui saisit une rotation dans le dispositif articulé de corps fixe ou dans une des articulations de corps fixe pour déterminer un mouvement rotatif du corps de réglage (10) par rapport au composant de base B1,
(8c) un détecteur de champ magnétique disposé dans l'actionneur (60), qui saisit l'intensité et la direction ou l'intensité ou la direction du champ magnétique dans l'espace entourant la bobine (71),
sachant que le dispositif de réglage comporte un dispositif de gestion des données, qui est relié du point de vue fonctionnel à au moins un détecteur respectif selon (8a), (8b), (8c) et comporte : une fonction d'interface, avec laquelle des signaux sont saisis, reçus et convertis en données de détection mémorisables et mémorisés par au moins un détecteur, et une fonction de transmission avec laquelle les données de détection sont transmises à un dispositif de réception d'un dispositif d'évaluation.

10. Système de réglage avec un dispositif de réglage (1) selon la revendication 9 et un dispositif d'évaluation, qui comporte :
une fonction de réception, qui reçoit les données de détection de la fonction de transmission,
une fonction d'évaluation, qui attribue une valeur d'état de fonctionnement pour le dispositif de réglage (1) à partir des données de détection.

11. Système de réglage selon la revendication 10, sachant que la fonction d'évaluation comporte une fonction d'entretien, qui compare une pluralité de données de détection à au moins une valeur théorique et génère la valeur d'état de fonctionnement en cas de dépassement supérieur ou inférieur de la valeur théorique.

12. Système de réglage selon la revendication 10 ou 11, sachant que le dispositif d'évaluation comporte un dispositif d'affichage, qui est relié de façon fonctionnelle à la fonction d'évaluation et affiche la valeur d'état de fonctionnement.

13. Système de réglage selon l'une quelconque des revendications 10 à 12, sachant que la fonction d'évaluation détermine au moins une valeur d'état de fonctionnement, qui affiche sur le dispositif d'affichage un ou plusieurs des états de fonctionnement suivants du dispositif de réglage (1):
(Z1) le dispositif de réglage (1) se trouve en fonctionnement normal,
(Z3) le dispositif de réglage (1) est défectueux,
(Z3) une mesure d'entretien ou un contrôle de sécurité doit avoir lieu pour le dispositif de réglage (1).

14. Système de réglage selon la revendication 10, sachant que la fonction d'évaluation comporte une fonction de simulation avec un modèle mathématique du dispositif de réglage (1) et avec une fonction de transmission, sachant que la fonction de transmission fournit une pluralité de données de détection au modèle mathématique et le modèle mathématique détermine à partir des données de détection des valeurs d'état de fonctionnement d'un ou de plusieurs des composants suivants :
(T1) du dispositif d'entraînement
(T2) du corps de réglage.

15. Progiciel, qui comporte une fonction d'évaluation qui attribue une valeur d'état de fonctionnement pour le dispositif de réglage (1) à partir des données de détection déterminées dans le dispositif de réglage (1) selon la revendication 9,
sachant que la fonction d'évaluation comporte une fonction de simulation avec un modèle mathématique d'un dispositif de réglage (1) selon l'une quelconque des revendications 1 à 7 et avec une fonction de transmission, sachant que la fonction de transmission fournit une pluralité de données de détection au modèle mathématique et le modèle mathématique détermine à partir des données de détection des valeurs d'état de réglage d'un ou de plusieurs des composants suivants :
(T1) du dispositif d'entraînement
(T2) du corps de réglage.

16. Progiciel, qui comporte un modèle mathématique de dispositif de réglage (1) selon l'une quelconque des revendications 1 à 7, sachant que le modèle mathématique du dispositif de réglage (1) détermine, sur la base d'au moins une valeur d'entrée pour un signal d'entrée électrique pour la bobine, des valeurs d'état de réglage d'un ou de plusieurs des composants suivants :
(T1) du dispositif d'entraînement
(T2) du corps de réglage.
